(19) Europäisches Patentamt
European Patent Office
Office européen des brevets

(11) **EP 3 516 718 B1**

(12) **FASCICULE DE BREVET EUROPEEN**

(45) Date de publication et mention
de la délivrance du brevet:
**21.10.2020  Bulletin 2020/43**

(21) Numéro de dépôt: **17772348.3**

(22) Date de dépôt: **15.09.2017**

(51) Int Cl.:
*H01M 8/0202* (2016.01)    *H01M 8/0273* (2016.01)
*H01M 8/0282* (2016.01)    *H01M 8/124* (2016.01)
*H01M 8/00* (2016.01)    *H01M 8/18* (2006.01)
*H01M 8/2432* (2016.01)    *H01M 8/04089* (2016.01)
*H01M 8/0271* (2016.01)    *H01M 8/0247* (2016.01)
*C25B 9/20* (2006.01)    *C25B 3/04* (2006.01)
*C25B 1/00* (2006.01)    *C25B 1/08* (2006.01)
*C25B 9/04* (2006.01)

(86) Numéro de dépôt international:
**PCT/EP2017/073301**

(87) Numéro de publication internationale:
**WO 2018/054781 (29.03.2018 Gazette 2018/13)**

(54) **PROCÉDÉS DE CO-ÉLECTROLYSE DE L'EAU ET DU CO2 (SOEC) OU DE PRODUCTION D'ÉLECTRICITÉ À HAUTE TEMPÉRATURE (SOFC) FAVORISANT OU NON LES RÉACTIONS CATALYTIQUES AU SEIN DE L'ÉLECTRODE H2**

VERFAHREN ZUR CO-ELEKTROLYSE VON WASSER UND CO2 (SOEC) ODER ZUR HOCHTEMPERATURELEKTRIZITÄTSERZEUGUNG (SOFC) MIT OPTIONALER FÖRDERUNG VON KATALYTISCHEN REAKTIONEN INNERHALB DER H2-ELEKTRODE

METHODS FOR CO-ELECTROLYSIS OF WATER AND CO2 (SOEC) OR FOR HIGH-TEMPERATURE ELECTRICITY GENERATION (SOFC) OPTIONALLY PROMOTING CATALYTIC REACTIONS INSIDE THE H2 ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2016  FR 1658908**

(43) Date de publication de la demande:
**31.07.2019  Bulletin 2019/31**

(73) Titulaire: **Commissariat à l'Énergie Atomique et aux Énergies Alternatives**
**75015 Paris (FR)**

(72) Inventeurs:
• **REYTIER, Magali**
  **38250 Villard De Lans (FR)**
• **ROUX, Guilhem**
  **38120 Saint-Egreve (FR)**
• **LAURENCIN, Jérôme**
  **38360 Sassenage (FR)**
• **PLANQUE, Michel**
  **38180 Seyssins (FR)**

(74) Mandataire: **Nony**
**11 rue Saint-Georges**
**75009 Paris (FR)**

(56) Documents cités:
**WO-A1-2016/097261     JP-A- S6 463 271**
**JP-A- 2006 114 387     JP-A- 2007 265 939**
**JP-A- 2009 026 524**

**Description**

Domaine technique

La présente invention concerne le domaine des piles à combustibles à oxydes solides (SOFC, acronyme anglais pour « *Solid Oxide Fuel Cell*») et celui de l'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») également à oxydes solides (SOEC, acronyme anglais pour « *Solid Oxide Electrolysis Cell*»).

L'invention a trait plus particulièrement à de nouveaux procédés de fonctionnement d'un réacteur de co-électrolyse à haute température (EHT) de type SOEC, à partir du dioxyde de carbone $CO_2$ et de vapeur d'eau $H_2O$ pour produire un gaz de synthèse (mélange de CO et $H_2$), ou d'une pile à combustible de type SOFC, à empilement de cellules électrochimiques élémentaires à oxydes solides.

Elle vise à proposer une solution pour favoriser ou non la réaction de méthanation au sein d'un réacteur EHT ou la réaction de reformage interne du méthane au sein d'une pile SOFC.

Bien que décrite en référence principalement à l'application de co-électrolyse à haute température du dioxyde de carbone $CO_2$ et de l'eau $H_2O$, l'invention s'applique tout aussi bien à une pile à combustible SOFC alimentée en H2 et/ou en méthane $CH_4$, en tant que combustible et en Air ou oxygène $O_2$ en tant que comburant.

Art antérieur

L'électrolyse de l'eau est une réaction électrochimique qui décompose l'eau en dioxygène et dihydrogène gazeux avec l'aide d'un courant électrique selon la réaction:

$$H_2O \rightarrow H_2 + \tfrac{1}{2} O_2.$$

Pour réaliser l'électrolyse de l'eau, il est avantageux de la réaliser à haute température typiquement entre 600 et 950°C, car une partie de l'énergie nécessaire à la réaction peut être apportée par de la chaleur moins chère que l'électricité et la réalisation de la réaction est plus efficace à haute température. Pour mettre en œuvre l'électrolyse à haute température, il est connu d'utiliser un électrolyseur de type SOEC (acronyme anglais de « *Solid Oxyde Electrolysis Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion, par exemple en alliages métalliques, aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extraits dans un électrolyseur EHT ; air et hydrogène et/ou méthane injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène $O^{2-}$ migrent à travers l'électrolyte et se recombinent en dioxygène à l'interface entre l'électrolyte et l'électrode à oxygène (anode).

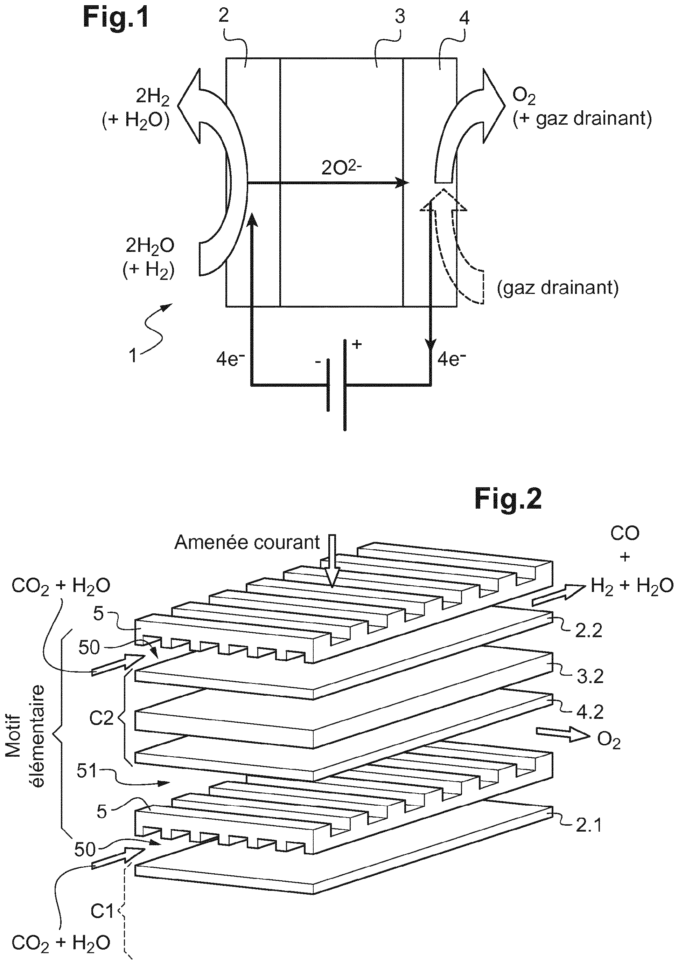

Comme schématisée en figure 1, chaque cellule d'électrolyse élémentaire 1 est formée d'une cathode 2 et d'une anode 4, placées de part et d'autre d'un électrolyte solide 3. Les deux électrodes (cathode et anode) 2,4 sont des conducteurs, en matériau poreux, et l'électrolyte 3 est étanche au gaz, isolant électronique et conducteur ionique. L'électrolyte peut être en particulier un conducteur anionique, plus précisément un conducteur anionique des ions $O^{2-}$ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

$$2\,H_2O + 4\,e^- \rightarrow 2\,H_2 + 2\,O^{2-}.$$

A l'anode 4, la demi-réaction est la suivante:

$$2\,O^{2-} \rightarrow O_2 + 4\,e^-.$$

L'électrolyte 3 intercalé entre les deux électrodes 2, 4 est le lieu de migration des ions $O^{2-}$, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène $H_2$ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un réacteur d'électrolyse ou électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont des conducteurs électroniques, sont en contact électrique avec les électrodes et assurent en général les fonctions d'amenée et de collecte de courant électrique et délimitent un ou des compartiments de circulation des gaz. Plus précisément, un interconnecteur assure le contact électrique par l'une de ses faces avec la cathode d'une cellule et par l'autre de ses faces avec l'anode de la cellule adjacente.

Ainsi, un compartiment dit cathodique a pour fonction la distribution du courant électrique et de la vapeur d'eau ainsi que la récupération de l'hydrogène produit à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un co-électrolyseur de vapeur d'eau à haute température selon l'état de l'art. Ce co-électrolyseur EHT comporte une pluralité de cellules de co-électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules de co-électrolyse est généralement alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection d'un mélange de vapeur d'eau et de dioxyde de carbone dans chaque motif élémentaire se fait dans le compartiment cathodique 50. Le collectage de l'hydrogène et du monoxyde de carbone produits et de la vapeur d'eau résiduelle à la cathode 2.1, 2.2 ... est effectué dans le compartiment cathodique 50 en aval de la cellule C1, C2... après dissociation de la vapeur d'eau et du dioxyde de carbone par celle-ci. Le collectage de l'oxygène produit à l'anode 4.2 est effectué dans le compartiment anodique 51 en aval de la cellule CI, C2... après dissociation de la vapeur d'eau et du dioxyde de carbone par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules CI, C2... et interconnecteurs 5 utilisés sont les mêmes composants, mais le fonctionnement est inverse de celui d'un co-électrolyseur EHT tel qui vient d'être expliqué avec un sens du courant inversé, avec de l'air qui alimente les compartiments alors cathodiques 51 et de l'hydrogène ou du méthane en tant que combustible qui alimente les compartiments alors anodiques 50.

Un fonctionnement satisfaisant d'un (co-)électrolyseur EHT ou d'une pile à combustible SOFC nécessite entre autres les fonctions essentielles suivantes:

A/ une bonne isolation électrique entre deux interconnecteurs adjacents dans l'empilement, sous peine de court-circuiter la cellule électrochimique élémentaire intercalée entre les deux interconnecteurs,
B/ une bonne étanchéité entre les deux compartiments distincts, i.e. anodique et cathodique, sous peine de recombinaison des gaz produits entraînant une baisse de rendement et surtout l'apparition de points chauds endommageant l'empilement,
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

De plus, le point de fonctionnement retenu pour le réacteur d'électrolyse ou la pile SOFC fixe aussi les conditions thermiques dans l'empilement. En effet, pour les électrolyses réalisées à haute température, l'énergie ΔH nécessaire à la dissociation de la molécule d'entrée ($H_2O$ ou $CO_2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F} \Delta H - U \cdot I \, ,$$

dans laquelle U est la tension électrique, I est le courant électrique et F est la constante de Faraday.
Ainsi, on définit trois régimes de fonctionnement pour l'électrolyse ou la co-électrolyse, correspondant à trois modes thermiques différents pour l'empilement de cellules:

- le mode dit autothermique dans lequel la tension imposée $U_{imp}$ est égale à ΔH/2F. La chaleur consommée par la réaction de dissociation est complètement compensée par les différentes résistances électriques de l'électrolyseur (irréversibilités). L'électrolyseur n'a pas besoin de gestion thermique particulière tout en restant stable en température.
- le mode dit endothermique dans lequel la tension imposée $U_{imp}$ est inférieure à ΔH/2F. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée Uimp est supérieure à ΔH / 2F. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

Le fonctionnement d'une pile alimentée en méthane $CH_4$ nécessite quant à lui des précautions. En effet, la gestion thermique de ce type de pile est un compromis. D'un côté, la réaction de reformage interne de l'électrode alimentée en $CH_4$ et en vapeur d'eau, selon l'équation $CH_4 + H_2O \rightarrow 3H_2 + CO$, catalysée par le cermet, en général en nickel-zircone car le nickel présente l'avantage d'être un très bon catalyseur de la réaction de reformage ci-dessus est fortement endothermique, alors que la réaction d'oxydation de l'hydrogène au sein de la pile visant à produire de l'électricité est fortement exothermique.
Ainsi, le fonctionnement en pile peut aussi varier d'un mode endothermique à un mode exothermique selon le ratio entre la réaction de reformage interne et la densité de courant. Sans précaution particulière, cela nécessite de gérer de forts gradients thermiques dans l'empilement, entre l'entrée et la sortie des gaz, ces gradients thermiques importants pouvant être rédhibitoires car induisant de fortes contraintes mécaniques. De plus, le fonctionnement d'une pile SOFC alimentée uniquement en hydrogène pur conduit rapidement à un échauffement de l'empilement limitant les puissances accessibles et le rendement, si de forts débits sont utilisés pour le refroidissement.
En outre, le transport, le stockage et l'utilisation de l'hydrogène ou du gaz de synthèse produit requièrent un minimum de pression. Plutôt que de comprimer le gaz produit, ce qui présente un coût important notamment pour l'hydrogène, ce type d'électrolyse par SOEC peut être fait directement à partir de vapeur d'eau sous pression, l'eau étant alors comprimée à l'état liquide.
Le fonctionnement interne d'une pile SOFC ou d'un réacteur EHT sous pression, typiquement de quelques bars à quelques dizaines de bars, typiquement 30 bars, requiert alors une solution pour éviter la perte des étanchéités par les joints.
Il est déjà connu une solution qui consiste à placer le réacteur à empilement EHT ou pile SOFC au sein d'une enceinte étanche elle-même pressurisée.
On peut citer ici les demandes de brevets ou brevets WO2011/110674A1, US2002/0081471 et US 6689499 B2 qui divulguent ce type de solution. Cette solution connue offre l'avantage de pouvoir imposer la même pression entre l'intérieur et l'extérieur de l'empilement. Cela permet donc un fonctionnement à une pression élevée, de quelques bars à quelques dizaines de bars, sans sollicitation mécanique des joints en verre ou en vitrocéramique.
Avec cette solution de réacteur EHT avec fonctionnement sous pression, il est possible de réaliser l'électrolyse de la vapeur d'eau $H_2O$ pour produire de l'hydrogène d'une part et de l'oxygène d'autre part qui peut être valorisé indépendamment. Ce même réacteur peut aussi permettre de réaliser la co-électrolyse d'un mélange $H_2O + CO_2$ pour former du syngaz, mélange de $H_2 + CO$ dans des proportions dépendantes du combustible visé.
Autrement dit, il est possible et avantageux d'envisager la fabrication d'un gaz combustible de synthèse par électrolyse de la vapeur d'eau $H_2O$ pour produire de l'hydrogène $H_2$ et/ou la co-électrolyse de $H_2O + CO_2$ à haute température au sein d'un réacteur à empilement de cellule à oxydes solides dans une enceinte sous pression.
Les réactions d'électrolyse de la vapeur d'eau (I) et de co-électrolyse de $H_2O + CO_2$ (II) se font selon les équations suivantes :

$$\text{Electrolyse de l'eau: } H_2O \rightarrow H_2 + 1/2O_2 \qquad (I)$$

$$\text{Co-électrolyse: } CO_2 + H_2O \rightarrow CO + H_2 + O_2 \qquad (II).$$

Ainsi, l'électrolyse de la vapeur d'eau $H_2O$ permet une fabrication du gaz combustible par injection d'un mélange d'hydrogène $H_2$ produit selon l'électrolyse (I) et de dioxyde de carbone $CO_2$ dans un catalyseur externe à l'électrolyseur.

La co-électrolyse de $H_2O+CO_2$ permet d'autre part une fabrication du gaz combustible à partir du gaz de synthèse ($H_2 + CO$) produit selon la co-électrolyse (II).

Le gaz combustible ainsi fabriqué peut être un hydrocarbure et notamment du méthane, principal composant du gaz naturel.

Différents procédés d'obtention d'un gaz combustible par catalyse hétérogène soit directement à partir d'un mélange d'$H_2$ et dioxyde de carbone $CO_2$, soit indirectement à partir d'un gaz de synthèse ($H_2 + CO$) ont déjà été étudiés.

En particulier, l'hydrogénation de $CO_2$ en méthane est un procédé industriel qui a été étudié à chaque choc énergétique, soit pour produire du méthane de synthèse à partir de $CO_2$ et $H_2$ purs, soit dans des centrales à gazéification du charbon avec des gaz et des conditions plus compliqués (procédé Fischer-Tropsch).

Chaque gaz de synthèse destiné à produire un combustible nécessite un ratio $H_2/CO$ donné en fonction du combustible visé.

Le tableau 1 ci-dessous illustre ainsi les ratios nécessaires en fonction de procédés de synthèse de différents combustibles :

TABLEAU 1

| PROCEDE DE SYNTHESE | PRODUIT COMBUSTIBLE OBTENU | CO-ELECTROLYSE RATIO $H_2/CO$ NECESSAIRE | ELECTROLYSE VAPEUR $H_2O$ RATIO $CO_2/H_2$ NECESSAIRE |
|---|---|---|---|
| synthèse du méthane | Gaz naturel | 1/3 | 1/4 |
| synthèse du méthanol | Méthanol | 1/2 | 1/3 |
| synthèse du diméthyléther (DME) | DME | 1/1 | 1/2 |
| synthèse Ficher Tropsch | Diesel | 1/2 | 1/3 |

Pour le procédé de méthanation, deux voies sont possibles et ont été plus ou moins étudiées selon l'état de l'art.

La première voie est celle d'une unique réaction selon l'équation suivante :

$$CO_2 + 4H_2 \rightarrow CH_4 + 2H_2O$$

La deuxième voie est celle d'une réaction en deux étapes selon les équations suivantes :

$$CO_2 + H2 \rightarrow CO + H_2O$$

$$CO + 3H2 \rightarrow CH_4 + H_2O$$

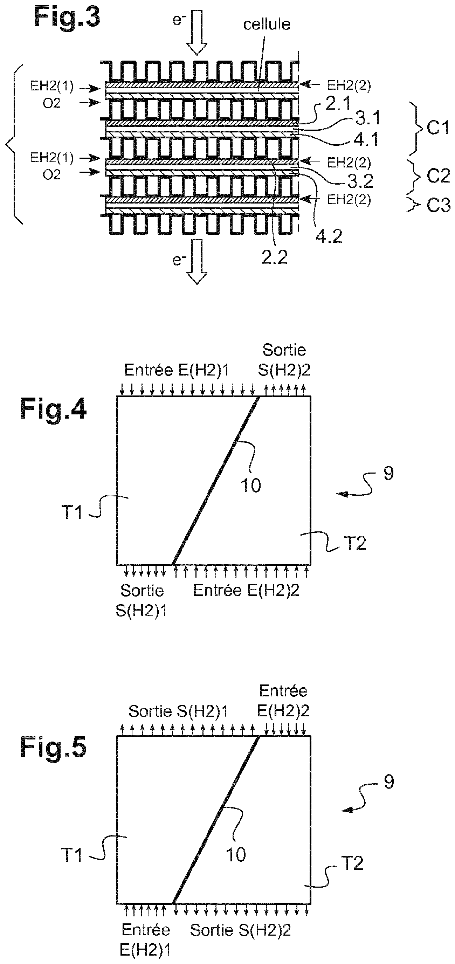

Comme mis en évidence par les auteurs de la publication [1] (voir notamment les figures 3 et 4), les réactions de méthanation sont favorisées à haute pression et à basse température selon la loi de Le Chatelier. En effet, les calculs thermodynamiques indiqués dans [1] indiquent une conversion théorique de 100% du $CO_2$ en $CH_4$ à moins de 150°C contre 83% à 400°C. Cependant, il est également indiqué qu'une température minimum ainsi qu'une vitesse des gaz optimum est à ajuster pour garantir une cinétique suffisante.

Les catalyseurs utilisés pour la méthanation sont en général à base de Nickel supporté par un oxyde de zirconium ($ZrO_2$), ou à base de nickel (Ni) supporté par un oxyde d'aluminium ($Al_2O_3$).

Une électrode couramment utilisée dans les réacteurs d'(de co-) électrolyse EHT ou pile à combustible SOFC est à base de nickel, telle qu'un cermet de nickel et de zircone yttriée noté Ni-YSZ. Le nickel présente notamment l'avantage d'être également un très bon catalyseur du reformage du méthane et/ou de sa formation par hydrogénation du $CO_2$ et du CO.

De ces publications, les inventeurs ont donc conclu qu'il était envisageable de produire directement du méthane au sein même d'un réacteur de co-électrolyse, en fonction du niveau de température, de pression et de débit des gaz.

Cela étant, ces réactions de méthanation sont exothermiques. Ainsi, tout comme pour la réaction de reformage d'une pile SOFC alimentée en méthane $CH_4$, le bilan thermique d'un réacteur de co-électrolyse sous pression utilisé pour mettre en œuvre une méthanation, doit tenir compte de l'exothermicité de cette réaction.

Ainsi, les réactions électrochimiques nécessaires au fonctionnement de ce type d'empilement en réacteur d'(de co-) électrolyse ou pile à combustible SOFC peuvent être réalisées dans diverses conditions électriques, thermiques et catalytiques, chacune ayant ses propres avantages et ses inconvénients.

En particulier, en mode endothermique pour l'électrolyse, on consomme moins d'électricité mais on produit moins d'hydrogène et il faut fournir de la chaleur à l'empilement. L'intérêt de ce point de fonctionnement réside dans la disponibilité d'une source de chaleur peu coûteuse. Tout dépend alors de la nature, de la température de cette source thermique et du design de l'interconnecteur permettant de valoriser cette chaleur au mieux.

A contrario, le mode exothermique pour l'électrolyse comme pour la pile conduit à une production importante soit des gaz formés soit d'électricité, mais il faut refroidir l'empilement soit par les gaz, ce qui peut être difficile à réaliser et coûteux énergétiquement, soit par les réactions catalytiques mettant en jeu les espèces en entrée ou formées par les réactions.

Une contrainte importante est de gérer au mieux ces régimes de fonctionnement thermiques d'une pile à combustible (SOFC) ou d'un électrolyseur (EHT).

En outre, quel que soit le design d'interconnecteur adopté à ce jour dans un réacteur à empilement de cellules à oxydes solides pouvant fonctionner sous pression soit en tant que réacteur d'(de co-)électrolyse ou en tant que pile à combustible SOFC, il n'est pas possible de favoriser ou non, à souhait, les réactions catalytiques au sein du réacteur sans dégrader le fonctionnement électrochimique, du fait que les surfaces catalytiques et électrochimiques sont les mêmes et correspondent à la surface du cermet.

Il existe donc un besoin d'améliorer les réacteurs d'électrolyse ou de co-électrolyse et les piles à combustible SOFC à empilement de cellules à oxydes solides fonctionnant à haute température, notamment afin de pouvoir favoriser ou non à souhait les réactions catalytiques susceptibles de se produire en leur sein, plus particulièrement la réaction de méthanation ou la réaction de reformage du méthane sans impacter le fonctionnement électrochimique.

Un but de l'invention est de répondre au moins en partie à ce besoin.

Exposé de l'invention

Pour ce faire, l'invention concerne, sous une première alternative, un procédé de co-électrolyse de la vapeur d'eau $H_2O$ et du dioxyde de carbone $CO_2$ et le cas échéant de méthanation, mis en œuvre dans un réacteur comportant un empilement de cellules d'électrolyse élémentaires de type à oxydes solides, de surface rectangulaire ou carrée, formées chacune d'une cathode comportant des matériau(x) catalyseur(s) de réaction de méthanation, d'une anode et d'un électrolyte intercalé entre la cathode et l'anode, une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, et une pluralité d'éléments de contact électrique et de distribution de gaz, agencés chacun entre une cathode et un interconnecteur.

Dans le procédé selon l'invention:

- on alimente de manière indépendante une première zone et une deuxième zone de chaque interconnecteur, en un mélange de vapeur d'eau $H_2O$ et de dioxyde de carbone $CO_2$ (EH2(1) et EH2(2)), et on le distribue à la cathode de chaque cellule élémentaire puis on récupère le gaz de synthèse produit (mélange de monoxyde de carbone CO et d'hydrogène $H_2$) et le cas échéant le mélange de méthane $CH_4$ et de vapeur d'eau $H_2O$ supplémentaire produit par méthanation, au sein même de la cathode, dans une troisième zone et une quatrième zone de chaque interconnecteur (SH2(1)) et (SH2(2)) en communication fluidique respectivement avec la première zone et la deuxième zone, chaque élément de contact électrique et de distribution des gaz intégrant un cordon d'étanchéité formant une barrière de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur et la section d'écoulement des gaz est également croissante ou décroissante entre les deuxième et quatrième zones au sein du deuxième secteur;

- on alimente les première et deuxième zones de chaque interconnecteur de telle sorte que la circulation à chaque cathode dans le premier secteur d'écoulement (T1) est à contre-courant de la circulation dans le deuxième secteur d'écoulement (T2).

Selon un mode de réalisation avantageux, les secteurs d'écoulement sont de forme générale trapézoïdale.

On précise ici que la forme croissante, en particulier trapézoïdale des secteurs est bien évidemment à considérer en vue de dessus de l'empilement. Et que la surface de cellule est celle active considérée en vue de dessus.

Selon une variante, on alimente par la plus grande base des premier et deuxième secteurs trapézoïdaux définie respectivement par la première et la troisième zones, afin de minimiser la réaction de méthanation comparativement à la réaction de co-électrolyse au sein de l'empilement, la surface catalytique diminuant le long du trajet des gaz produits pour la même surface électrochimique

Alternativement, on alimente par la plus petite base des première et deuxième secteurs trapézoïdaux définie respectivement par la première et la troisième zones, afin de maximiser la réaction de méthanation comparativement à la réaction de co-électrolyse au sein de l'empilement, la surface catalytique augmentant le long du trajet des gaz produits pour la même surface électrochimique. Cela permet d'envisager de fabriquer in situ, au moins en partie, l'eau nécessaire à la co-électrolyse par cette réaction de méthanation plutôt que par vaporisation.

Avantageusement, on détermine au préalable le rapport de longueur entre petite et grande bases des secteurs trapézoïdaux afin de favoriser ou non la réaction de méthanation comparativement à la réaction de co-électrolyse au sein de l'empilement.

Selon un mode de réalisation avantageux, on alimente en gaz drainant, tel que de l'air, une cinquième zone de chaque interconnecteur (E(O2)), et on le distribue à l'anode de chaque cellule, puis on récupère l'oxygène $O_2$ produit et le cas échéant le gaz drainant dans une sixième zone de chaque interconnecteur S(O2), de sorte à avoir une alimentation en gaz drainant et une récupération d'oxygène produit communes aux premier et deuxième secteurs trapézoïdaux.

Avantageusement, la co-électrolyse est mise en œuvre au moins en partie avec la vapeur d'eau $H_2O$ produite par méthanation.

L'invention concerne également, sous une deuxième alternative un procédé de production d'électricité à haute température, mis en œuvre dans une pile à combustible à oxydes solides (SOFC) comportant un empilement de cellules électrochimiques élémentaires de type SOFC, formées chacune d'une cathode, d'une anode comportant des matériau(x) catalyseur(s) de réaction de reformage de méthane ($CH_4$), et d'un électrolyte intercalé entre la cathode et l'anode, une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, et une pluralité d'éléments de contact électrique et de distribution de gaz, agencés chacun entre une anode et un interconnecteur.

Dans le procédé selon l'invention:

- on alimente de manière indépendante une première zone et une deuxième zone de chaque interconnecteur, en un combustible, et on le distribue à l'anode de chaque cellule élémentaire puis on récupère le surplus de combustible ($CH_4$ et le cas échéant mélange de monoxyde de carbone CO et d'hydrogène $H_2$ suite au reformage) et l'eau produite, dans une troisième zone et une quatrième zone de chaque interconnecteur en communication fluidique respectivement avec la première zone et la deuxième zone; chaque élément de contact électrique et de distribution des gaz intégrant un cordon d'étanchéité formant une barrière de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur et la section d'écoulement des gaz est également croissante ou décroissante entre les deuxième et quatrième zones au sein du deuxième secteur ;
- on alimente les première et deuxième zones de chaque interconnecteur de telle sorte que la circulation à chaque anode dans le premier secteur d'écoulement est à contre-courant de la circulation dans le deuxième secteur d'écoulement.

La barrière d'étanchéité aux gaz sépare l'élément de contact électrique en deux secteurs d'écoulement distincts, et également l'électrode H2 poreuse. Il peut s'agir d'un cordon en verre, en vitrocéramique ou d'une brasure qui infiltre avantageusement l'électrode lors de sa mise en place. La barrière a ainsi pour fonction de gêner le passage des gaz sans qu'il y ait besoin d'une étanchéité parfaite. Réaliser la barrière selon l'invention à partir d'un cordon de vitrocéramique est particulièrement avantageux. Une vitrocéramique se présente à température ambiante sous forme d'une pâte qu'il est aisé de faire pénétrer un substrat poreux métallique, tel qu'une grille de nickel et aussi l'électrode H2 poreuse. Une montée en température du joint à des températures entre 850 et 1000°C va permettre de faire fondre la vitrocéramique qui va se mettre en place à chaud et épouser la forme du substrat poreux de l'élément de contact électrique en remplissant les porosités, telles que les mailles de la grille de nickel, et ce selon le profil continu de barrière qu'on souhaite lui donner. Une fois mis en place, la barrière est cristallisée aux températures de fonctionnement du réacteur ou la pile à combustible, typiquement entre 600 et 850°C, et empêche donc tout passage des gaz injectés (H2O, H2, CO, CO2, CH4, ...) d'un secteur d'écoulement T1 à l'autre T2 qui lui est jointif.

Selon une variante, on alimente par la plus grande base des premier et deuxième secteurs trapézoïdaux délimitée respectivement par la première et la troisième zone, afin de maximiser la réaction de reformage comparativement à la production de l'eau au sein de l'empilement par oxydation de l'hydrogène.

Alternativement, on alimente par la plus petite base des première et deuxième secteurs trapézoïdaux délimitée respectivement par la première et la troisième zone, afin de minimiser la réaction de reformage comparativement à la production de l'eau au sein de l'empilement, ce qui permet d'envisager de fabriquer in situ, au moins en partie, l'eau nécessaire au reformage.

Avantageusement, on détermine au préalable le rapport de longueur entre petite et grande bases des secteurs trapézoïdaux afin de favoriser ou non la réaction de de reformage comparativement à la réaction de production de l'eau par oxydation de l'hydrogène au sein de la pile.

Selon un mode de réalisation avantageux, on alimente en comburant, tel que de l'air, une cinquième zone de chaque interconnecteur, et on le distribue à la cathode de chaque cellule, puis on récupère le surplus de comburant restant dans une sixième zone de chaque interconnecteur, de sorte à avoir une alimentation en gaz comburant et une récupération d'oxygène restant communes aux premier et deuxième secteurs trapézoïdaux.

Le combustible peut être avantageusement de l'hydrogène ou le méthane ($CH_4$), ou un mélange des deux.

Avantageusement, le reformage est mis en œuvre au moins en partie avec l'eau produite par oxydation.

De préférence, on alimente le première et le deuxième secteur trapézoïdal avec des compositions et débits en gaz identiques en fonctionnement nominal. A contrario, en cas de nécessité de plus chauffer ou plus refroidir un des secteurs de l'empilement comparativement à l'autre, il peut être envisagé de ne pas alimenter chaque secteur de manière identique.

Cette nécessité peut apparaître en cas de dysfonctionnement (fuite, enceinte chauffante dans laquelle est placé l'empilement défectueux, problème d'isolation thermique) : dans ce cas, ne pas alimenter un secteur comparativement à l'autre jointif permet de plus chauffer ou plus refroidir l'un par rapport à l'autre secteur jointif.

Ainsi, l'invention consiste essentiellement à proposer une nouvelle architecture de réacteur ou pile à combustible avec une section active du matériau catalytique de réaction de méthanation ou de reformage intégré dans l'électrode qui varie avec la composition des gaz, au fur et à mesure de leur distribution dépendant de l'électrochimie sur ladite électrode.

Cette variation de la section catalytique active rencontrée par les gaz le long de leur distribution est réalisée sans modifier la surface électrochimique des cellules et donc de la collecte ou amenée du courant qui reste identique à l'état de l'art.

Cette variation de section catalytique est réalisée par la division de l'alimentation et la récupération des gaz en deux circuits indépendants au sein de chaque interconnecteur et par la séparation physique de la surface d'écoulement des gaz sur l'électrode (et catalyseur) au moyen d'une barrière intégrée dans chaque élément de contact électrique, ainsi qu'au sein de l'électrode, qui définissent deux secteurs d'écoulement de forme trapézoïdale jointifs dont la somme de leur surface est celle carrée ou rectangulaire de la surface électrochimique des cellules.

Ainsi, pour une même surface électrochimique, les réactions aux électrodes comportant des matériau(x) catalytique(s) (cathodes en réacteur de co-électrolyse ou anodes en pile à combustible) peuvent être favorisées ou non en fonction de l'évolution de la vitesse des gaz distribués déterminée par la localisation des grandes bases des trapèzes soit en entrée des gaz, soit en sortie des produits issus de la réaction électrochimique.

Grâce à l'invention, on réalise au sein d'un même empilement un découplage entre réaction électrochimique et activité catalytique, ce qui permet en partie de mieux gérer les espèces produites le long de l'écoulement des gaz, mais surtout de gérer la thermique de l'empilement en pilotant la réaction catalytique sans changer le point de fonctionnement électrochimique.

Ainsi, en mode pile à combustible, il est préférable de maximiser le reformage interne rapide pour que l'oxydation de l'hydrogène puisse avoir lieu rapidement sous peine d'endommager les cellules.

En mode de co-électrolyse de $H_2O+CO_2$, selon l'utilisation du gaz de synthèse ($H_2+CO$) envisagée à la sortie du réacteur, qui doit être converti en méthane ou en autres produits, on peut chercher à favoriser la méthanation in situ au sein du réacteur ou bien au contraire chercher à l'éviter.

En d'autres termes, en introduisant une variation de section catalytique entre l'entrée et la sortie d'électrode, l'invention permet de découpler la réaction catalytique de méthanation ou de reformage avec celle électrochimique qui a lieu au sein de l'empilement du réacteur ou respectivement de la pile SOFC.

Et en déterminant au préalable, les rapports dimensionnels entre la section catalytique d'entrée et la section de sortie, on peut définir à souhait un ratio précis et déterminé entre réaction catalytique et réaction électrochimique.

De plus, un avantage subséquent de l'invention est la possibilité de réduire la quantité d'eau à vaporiser en entrée de réacteur de co-électrolyse, grâce à la réaction de méthanation qui peut être favorisée in situ. En effet, une réaction de méthanation forme aussi de l'eau.

Donc, le fait de privilégier la mise en œuvre de la méthanation au sein d'un réacteur de co-électrolyse permet d'obtenir de l'eau in situ déjà sous la forme vapeur et donc d'avoir déjà une partie de l'eau nécessaire à la co-électrolyse sans avoir besoin de vaporiser cette quantité d'eau liquide en amont.

Cela peut avoir un impact considérable sur le rendement d'une installation globale, notamment car disposer d'eau déjà sous la forme vapeur permet d'éviter de vaporiser par une source électrique distincte, en l'absence d'une source chaude externe et donc permet de diminuer les coûts énergétiques de fonctionnement de l'installation, et par là, d'obtenir un meilleur rendement.

En outre, la nouvelle architecture selon l'invention présente l'avantage d'améliorer l'homogénéité thermique globale de chaque cellule dans le cas de réactions électrochimiques ou catalytiques généralement exothermiques ou endothermiques.

En effet, les sources thermiques qui apparaissent à un endroit précis de la cellule (typiquement soit en entrée, soit en sortie), peuvent créer des gradients thermiques pouvant être rédhibitoires sur le plan de la résistance mécanique de cette cellule.

Grâce à l'invention, les gradients thermiques sont fortement réduits le long de la cellule, puisque chacun de ces bords comprend à la fois une entrée et une sortie (première et troisième zone, ainsi que deuxième et quatrième zone). Les écarts de températures au sein de chaque cellule sont alors réduits grâce à la conception des secteurs au sein de l'empilement.

Les interconnecteurs envisagés dans le cadre de l'invention permettent de conserver une circulation des gaz sur les cellules à courant croisé entre le combustible et le comburant ou gaz drainant.

Les procédés selon l'invention ne modifient pas la réversibilité d'un empilement de ce type qui peut être utilisé aussi bien en tant que réacteur de co-électrolyse SOEC avec éventuellement méthanation in situ, qu'en tant que pile SOFC avec comme combustible de l'hydrogène, et/ou du méthane avec reformage interne.

L'invention a également pour objet, selon la première alternative, un réacteur de co-électrolyse SOEC pour la mise en œuvre d'une co-électrolyse de la vapeur d'eau $H_2O$ et du dioxyde de carbone $CO_2$ et le cas échéant d'une réaction de méthanation in situ comportant un empilement de cellules d'électrolyse élémentaires de type à oxydes solides, de surface rectangulaire ou carrée, formées chacune d'une cathode comportant des matériau(x) catalyseur(s) de réaction de méthanation, d'une anode et d'un électrolyte intercalé entre la cathode et l'anode, une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, et une pluralité d'éléments de contact électrique et de distribution de gaz, agencés chacun entre une cathode et un interconnecteur, chaque élément de contact électrique et de distribution des gaz intégrant un cordon d'étanchéité formant une barrière de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également croissante ou décroissante entre les deuxième et quatrième zones au sein du deuxième secteur (T2).

L'invention a également pour objet, selon la deuxième alternative, une pile à combustible (SOFC) à haute température pour la mise en œuvre éventuelle d'un reformage interne de méthane ($CH_4$), comportant un empilement de cellules élémentaires de type à oxydes solides, de surface rectangulaire ou carrée, formées chacune d'une cathode, d'une anode comportant des matériau(x) catalyseur(s) de la réaction de reformage du méthane ($CH_4$), et d'un électrolyte intercalé entre la cathode et l'anode, une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, et une pluralité d'éléments de contact électrique et de distribution de gaz, agencés chacun entre une cathode et un interconnecteur, chaque élément de contact électrique et de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également décroissante ou croissante entre les deuxième et quatrième zones au sein du deuxième secteur (T2).

Dans le cadre de l'invention, chaque interconnecteur est avantageusement une pièce consistant en trois tôles planes, allongées selon deux axes de symétrie X, Y orthogonaux entre eux, l'une des tôles d'extrémité étant destinée à venir en contact mécanique avec le plan d'une cathode d'une cellule électrochimique élémentaire et l'autre des tôles d'extrémité étant destinée à venir en contact mécanique avec le plan d'une anode d'une cellule électrochimique élémentaire adjacente, dans lequel :

- une des tôles d'extrémité, dite première tôle d'extrémité, comporte une partie centrale percée tandis que l'autre des tôles d'extrémité, dite deuxième tôle d'extrémité, ainsi que la tôle centrale comporte une partie centrale non percée,
- chacune des trois tôles planes comporte une partie centrale, percée à sa périphérie de six lumières, les premières à quatrième lumières de chaque tôle étant allongées sur une longueur correspondant à une partie de la longueur de la partie centrale selon l'un des axes X des tôles et étant réparties deux à deux de part et d'autre dudit axe X, tandis que les cinquième et la sixième lumière sont chacune allongées sur une longueur correspondant sensiblement à la longueur de la partie centrale selon l'autre des axes Y,
- la première tôle d'extrémité comporte en outre une septième et une huitième lumières agencées symétriquement de part et d'autre de l'axe Y, à l'intérieur de ses premières à quatrième lumières, et sont allongées sur une longueur correspondant sensiblement à la longueur de la partie centrale selon l'axe Y, tandis que l'autre des tôles d'extrémité, dite deuxième tôle d'extrémité, comporte en outre une septième, huitième, neuvième et dixième lumières à l'intérieur respectivement de sa première, deuxième troisième et quatrième lumières, chacune de ces septième à dixième lumières étant allongée sur une longueur correspondant sensiblement respectivement à la longueur de la première à quatrième lumières selon l'axe X, et,

- les première à sixième lumières de la tôle centrale sont élargies vers l'intérieur par rapport respectivement aux première à sixième lumières de chaque tôle d'extrémité,
- les première et deuxième lumières des trois tôles sont de dimensions sensiblement identiques entre elles et les troisième et quatrièmes lumières des trois tôles sont de dimensions sensiblement identiques entre elles, la longueur des première et deuxième lumières étant de préférence supérieure à celle troisième et quatrièmes lumières,
- les septième et huitième lumières de la deuxième tôle d'extrémité sont de dimensions sensiblement identiques à celles de ses première et deuxième lumières, tandis que les neuvième et dixième lumières de la deuxième tôle d'extrémité sont de dimensions sensiblement identiques à celles de ses troisième et quatrième lumières,
- toutes les lumières élargies de la tôle centrale comportent dans leur partie élargie, des languettes de tôles espacées les unes des autres en formant un peigne, chacune des fentes définie entre le bord d'une fente élargie et une languette ou entre deux languettes consécutives débouchant sur une des lumières intérieures respectivement de la première ou de la deuxième tôle d'extrémité,
- les trois tôles sont stratifiées et assemblées entre elles telles que:

  • les languettes de tôles forment des entretoises d'espacement entre première et deuxième tôles d'extrémité respectivement entre les cinquième et septième lumières de la première tôle d'extrémité, entre les sixième et huitième lumières de la première tôle d'extrémité, entre les première et septième lumières de la deuxième tôle d'extrémité, entre les deuxième et huitième lumières de la deuxième tôle d'extrémité, entre les troisième et neuvième lumières de la deuxième tôle d'extrémité, et entre les quatrième et dixième lumières de la deuxième tôle d'extrémité,
  • chacune des première à sixième lumières de l'une des trois tôles est en communication fluidique individuellement respectivement avec l'une des première à sixième lumières correspondantes des deux autres tôles,
  • la cinquième et la septième lumières de la première tôle d'extrémité sont en communication fluidique par le biais des fentes de la cinquième lumière élargie de

la tôle centrale, tandis que la sixième et la huitième lumières de la première tôle d'extrémité sont en communication fluidique par le biais des fentes de la sixième lumière élargie de la tôle centrale,

  • la première et la septième lumières de la deuxième tôle d'extrémité sont en communication fluidique par le biais des fentes de la première lumière élargie de la tôle centrale, tandis que la deuxième et la huitième lumières de la deuxième tôle d'extrémité sont en communication fluidique par le biais des fentes de la deuxième lumière élargie de la tôle centrale, la troisième et la neuvième lumières de la deuxième tôle d'extrémité sont en communication fluidique par le biais des fentes de la troisième lumière élargie de la tôle centrale, et la quatrième et la dixième lumières de la deuxième tôle d'extrémité sont en communication fluidique par le biais des fentes de la quatrième lumière élargie de la tôle centrale.

Avantageusement, le réacteur et la pile SOFC constituent le même dispositif destiné à fonctionner de manière réversible en mode co-électrolyse, le cas échéant avec méthanation in situ et en mode pile à combustible, le cas échéant avec reformage interne de méthane.

De préférence, les cathodes comportant des matériau(x) catalyseur(s) de réaction de méthanation ou les anodes comportant des matériau(x) catalyseur(s) de réaction de reformage du méthane ($CH_4$), étant chacune de préférence à base de nickel (Ni) supporté par de la zircone ($ZrO_2$), telle qu'un cermet de nickel et de zircone yttriée noté Ni-YSZ.

Selon une variante de réalisation avantageuse, chaque élément de contact électrique et de distribution des gaz est une grille en nickel (Ni) intégrant, en tant que barrière d'étanchéité, un cordon à base de verre ou à base de vitrocéramique.

De préférence, cette barrière pénètre aussi l'électrode poreuse (cathode pour le réacteur EHT, anode pour pile), telle qu'une électrode en cermet Ni-YSZ. On crée ainsi une étanchéité complète entre les deux secteurs jointifs d'un même compartiment de circulation.

En résumé, les procédés et électrolyseur/pile à combustible selon l'invention présentent de nombreuses caractéristiques et avantages, parmi lesquels on peut citer:

- une séparation physique de la surface électrochimique d'une même cellule en deux secteurs de forme trapézoïdale (en vue de face de la cellule) jointives et indépendantes, la forme trapézoïdale définissant une section de matériau catalytique qui varie progressivement avec la composition des gaz le long de l'écoulement dans cette section ;
- la séparation physique est réalisée par intégration d'une barrière d'étanchéité aux gaz au sein de l'élément de contact électrique et de distribution des gaz, ainsi qu'au sein de l'électrode poreuse de circulation d'$H_2$. De préférence, la barrière est un cordon en verre ou en vitrocéramique intégré dans une grille en nickel, le verre ou la vitrocéramique pénétrant à la fois la grille et l'électrode;
- un pilotage de la prépondérance ou non des réactions catalytiques comparativement aux réactions électrochimiques, et ce en déterminant au préalable la géométrie des deux secteurs trapézoïdaux, notamment le rapport de longueur entre petite et grande base de chaque trapèze. Avec l'entrée des gaz par la grande base des secteurs, la section catalytique diminue et la vitesse du gaz augmente le long de leur distribution sur chaque cellule, ce qui permet de réduire les réactions catalytiques impliquées le long de la distribution électrochimiques. Inversement, avec l'entrée des gaz par la petite base des secteurs, la section catalytique augmente et la vitesse du gaz diminue le long de leur distribution sur chaque cellule, ce qui permet de favoriser les réactions catalytiques impliquant les gaz produits par électrochimie le long de la distribution ;
- une amélioration de l'homogénéité thermique des cellules de l'empilement comparativement à celles d'un réacteur EHT ou pile SOFC électrolyse à haute température selon l'état de l'art;
- une gestion possible du méthane obtenu au sein d'un réacteur de co-électrolyse à haute température et fonctionnant de préférence sous pression, de préférence entre 5 et 30 bars ;
- une gestion possible du gaz de synthèse obtenu au sein d'une pile SOFC par reformage interne, conditionnant ainsi la thermique de la pile;
- une gestion possible de la vapeur d'eau formée au sein même d'un empilement SOEC de co-électrolyse en favorisant la réaction de méthanation in situ, ce qui permet d'économiser une partie de l'énergie de vaporisation de l'eau requise en amont de l'empilement et par là, permet un gain du rendement d'une installation comprenant le réacteur de co-électrolyse selon l'invention.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell*», c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

Par « réversible », on entend dans le cadre de l'invention que la pile à combustible SOFC peut être utilisée en tant qu'électrolyseur SOEC en mode de fonctionnement d'électrolyse, inverse à celui de la pile, l'(les) anode(s) de la pile SOFC jouant alors le rôle de cathode(s) de l'électrolyseur.

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :

- la figure 1 est une vue schématique montrant le principe de fonctionnement d'un électrolyseur d'eau à haute température;
- la figure 2 est une vue schématique en éclaté d'une partie d'un co-électrolyseur de vapeur d'eau à haute température comprenant des interconnecteurs selon l'état de l'art,

- la figure 3 est une vue schématique en coupe d'un réacteur de co-électrolyse mettant en œuvre le procédé de co-électrolyse à haute température selon un mode de l'invention,
- la figure 4 est une vue schématique du dessus d'un réacteur de co-électrolyse mettant en œuvre le procédé de co-électrolyse à haute température selon un mode de l'invention,
- la figure 5 est une vue schématique du dessus d'un réacteur de co-électrolyse mettant en œuvre le procédé de co-électrolyse à haute température selon un autre mode de l'invention, alternatif à celui de la figure 4,
- la figure 6A est une vue en éclaté du dessous d'une partie d'un réacteur de co-électrolyse selon l'invention avec des interconnecteurs et un élément de contact électrique et de distribution des gaz permettant une alimentation et circulation indépendantes à des gaz cathodiques ($H_2O$, $CO_2$, $H_2$, CO, $CH_4$) à contre-courant, d'un secteur de forme trapézoïdal à un autre jointif dont la somme des surfaces est égale à celle d'une cellule de co-électrolyse,
- la figure 6B est une vue en éclaté du dessus de la partie de réacteur montrée en figure 6A, l'alimentation/récupération du gaz drainant et de l'oxygène produit, étant commune aux deux secteurs trapézoïdaux,
- la figure 7 est une vue en éclaté d'un interconnecteur d'un réacteur de co-électrolyse selon un mode de réalisation de l'invention, qui permet une alimentation et circulation indépendantes en gaz cathodiques (H2O, CO2, H2, CO, CH4), d'un secteur de forme trapézoïdal à un autre jointif dont la somme des surfaces est égale à celle d'une cellule de co-électrolyse,
- la figure 7A est une vue de détail de la figure 7,
- la figure 7B est une vue de détail en perspective de la figure 7,
- les figures 8A et 8B sont des vues de face respectivement de part et d'autre d'un interconnecteur d'un réacteur de co-électrolyse selon l'invention montrant plus précisément l'agencement des cordons d'étanchéité dont la barrière délimitant les secteurs trapézoïdaux conformes à l'invention, ainsi que le parcours des gaz, la circulation de l'oxygène produit se faisant dans un seul compartiment sur toute la surface de l'anode;
- les figures 9A et 9B correspondent respectivement aux figures 8A et 8B en montrant plus précisément l'agencement des lignes de soudure des trois tôles planes formant un interconnecteur selon l'invention,
- les figures 10A et 10B sont des vues de face respectivement de part et d'autre d'un interconnecteur d'un réacteur de co-électrolyse selon l'invention montrant plus précisément l'agencement des cordons d'étanchéité dont la barrière délimitant les secteurs trapézoïdaux conformes à l'invention, ainsi que le parcours des gaz avec la circulation de l'oxygène produit se faisant dans deux secteurs trapézoïdaux distincts.

On précise ici que sur l'ensemble des figures 1 à 10B, les symboles et les flèches d'alimentation d'une part de vapeur d'eau $H_2O$ et de dioxyde de carbone $CO_2$, de distribution et de récupération des produits de la co-électrolyse avec le cas échéant de la réaction de méthanation in situ, et d'oxygène $O_2$ et du courant sont montrés à des fins de clarté et de précision, pour illustrer le fonctionnement d'un réacteur de co- électrolyse de vapeur d'eau et de CO2 selon l'état de l'art et d'un réacteur de co-électrolyse de vapeur d'eau selon l'invention.

On précise également que dans l'ensemble de la demande les termes « dessus », dessous », « à l'aplomb », « vertical », « inférieur », « supérieur », « bas », «haut », « dessous » et « dessus » sont à comprendre par référence par rapport à un réacteur d'électrolyse SOEC ou une pile SOFC en configuration verticale en fonctionnement, c'est-à-dire avec les plans d'interconnecteurs et cellules électrochimiques à l'horizontal, l'électrode O2 en dessous de l'électrode H2. On précise enfin que tous les électrolyseurs décrits sont de type à oxydes solides (SOEC, acronyme anglais de « *Solid Oxide Electrolysis Cell* ») fonctionnant à haute température. La haute température de fonctionnement d'un électrolyseur (réacteur d'électrolyse) est typiquement comprise entre 600°C et 950°C.

Typiquement, les caractéristiques d'une cellule d'électrolyse élémentaire SOEC convenant à l'invention, du type cathode (électrode H2) support (CSC), peuvent être celles indiquées comme suit dans le tableau 2 ci-dessous.

**TABLEAU 2**

| Cellule d'électrolyse | Unité | Valeur |
|---|---|---|
| **Cathode 2** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |

(suite)

| Cellule d'électrolyse | Unité | Valeur |
|---|---|---|
| **Cathode 2** | | |
| Tortuosité | | 4 |
| Densité de courant | A.m$^{-2}$ | 5300 |
| **Anode 4** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | 1 10$^4$ |
| Porosité | | 0,37 |
| Perméabilité | m$^2$ | 10$^{-13}$ |
| Tortuosité | | 4 |
| Densité de courant | A.m$^{-2}$ | 2000 |
| **Electrolyte 3** | | |
| Matériau constitutif | | YSZ |
| Epaisseur | $\mu$m | 90$\mu$m en électrolyte support et 5 $\mu$m en électrode support |
| Résistivité | $\Omega$ m | 0,42 |

Typiquement, la surface d'une cellule est de l'ordre de 100 cm$^2$.

Les figures 1 et 2 ont déjà été décrites en détail en préambule. Elles ne le sont donc pas ci-après.

Par convention, et afin de faciliter la lecture des circulations des gaz sur les différentes figures, on utilise les symboles suivants :

- EH2(1) : désigne l'entrée des gaz circulant à travers l'empilement du mélange de vapeur d'eau et de dioxyde de carbone alimentant un secteur trapézoïdal T1 des cellules de co-électrolyse C1, C2... ;
- SH2(1) : désigne la sortie des gaz circulant à travers l'empilement et contenant les produits de la réaction de co-électrolyse et le cas échéant de méthanation in situ, récupérés en sortie d'un secteur trapézoïdal T1 aux cellules de co-électrolyse CI, C2. ;
- EH2(2) : désigne l'entrée des gaz circulant à travers l'empilement du mélange de vapeur d'eau et de dioxyde de carbone alimentant un secteur trapézoïdal T2 des cellules de co-électrolyse CI, C2... ;
- SH2(2) : désigne la sortie des gaz circulant à travers l'empilement et contenant les produits de la réaction de co-électrolyse et le cas échéant de méthanation in situ, récupérés en sortie d'un secteur trapézoïdal T2 aux cellules de co-électrolyse CI, C2;
- E(O$_2$): désigne l'entrée du gaz comburant circulant à travers l'empilement et alimentant toutes les cellules de co-électrolyse C1, C2;
- S(O$_2$) : désigne la sortie du gaz comburant circulant à travers l'empilement et contenant l'oxygène produit aux cellules de co-électrolyse CI, C2...

Les inventeurs ont pu analyser qu'il était envisageable de produire directement du méthane au sein même d'un réacteur de co-électrolyse, selon les conditions de température et de pression typiques.

Fort du constat, les inventeurs ont également mis en exergue que malgré les nombreux développements des architectures des réacteurs à empilement de cellules à oxydes solides et plus particulièrement des interconnecteurs, il n'est pas possible de favoriser ou non, à souhait, les réactions catalytiques au sein des réacteurs existants, indépendamment du fonctionnement électrochimique, du fait que les surfaces catalytiques et électrochimiques sont les mêmes et correspondent à la surface du cermet.

Aussi, pour surmonter cette difficulté, ils ont pensé à définir un réacteur avec une section catalytique de la cathode qui varie avec la composition des gaz le long de la distribution. Ils ont alors pensé à diviser la surface active de cathode en deux secteurs trapézoïdaux jointifs dont la somme des surfaces correspond à la surface totale d'une cellule électrochimique et dans lesquels la circulation des gaz dans l'un des secteurs est à contre-courant de l'autre.

Ainsi, pour une même surface électrochimique de la cellule (la somme des deux trapèzes) la réaction catalytique de méthanation peut être favorisée ou non par l'évolution de la vitesse des gaz au sein de ces secteurs, ainsi que par la section catalytique traversé par un mélange de gaz donné le long du parcours sur la cellule. La détermination préalable de la forme des trapèzes, notamment le rapport de longueur de leurs bases permet de piloter ce ratio entre réaction de méthanation et réaction électrochimique de co-électrolyse.

Le procédé de co-électrolyse de la vapeur d'eau $H_2O$ et du dioxyde de carbone $CO_2$ et le cas échéant de méthanation in situ, selon l'invention est mis en œuvre dans un réacteur 1 comportant un empilement de cellules d'électrolyse élémentaires Cl, C2... de type à oxydes solides, de surface rectangulaire ou carrée.

Chaque cellule Cl, C2... est formée d'une cathode 2.1, 2.2... comportant des matériau(x) catalyseur(s) de réaction de méthanation, d'une anode 4.1, 4.2... et d'un électrolyte 3.1, 3.2... intercalé entre la cathode et l'anode.

L'empilement comprend en outre une pluralité d'interconnecteurs 5 électrique et fluidique agencés chacun entre deux cellules élémentaires C1, C2 adjacentes avec une de ses faces en contact électrique avec l'anode 4.1 d'une C1 des deux cellules élémentaires et l'autre de ses faces en contact électrique avec la cathode 2.2 de l'autre C2 des deux cellules élémentaires, et une pluralité d'éléments 9 de contact électrique et de distribution de gaz, agencés chacun entre une cathode et un interconnecteur.

Conformément à l'invention, chaque élément 9 de contact électrique et de distribution des gaz intégrant un cordon d'étanchéité 10, comme schématisé aux figures 4 et 5. De préférence, pour réaliser ces cordons, on dépose un cordon en verre ou en vitrocéramique sur chacune des grilles de nickel qui va à la fois pénétrer la grille de nickel et la cathode poreuse et faire ainsi une séparation étanche entre les deux secteurs jointifs T1, T2 des compartiments cathodiques.

En outre, comme illustré en figures 3 à 5, on alimente de manière indépendante une première zone (entrée EH2(1) à gauche sur la figure 3 et en haut sur la figure 4) et une deuxième zone (entrée EH2(2) à droite sur la figure 3 et en bas sur la figure 4) de chaque interconnecteur 5, en un mélange de vapeur d'eau H2O et de dioxyde de carbone CO2 et on le distribue à la cathode 2.1, 2.2 de chaque cellule élémentaire C1, C2... puis on récupère, le gaz de synthèse produit (mélange de monoxyde de carbone CO et d'hydrogène H2) et le cas échéant le mélange de méthane CH4 et de vapeur d'eau H2O supplémentaire produit par méthanation dans une troisième zone (sortie SH2(1) en bas sur la figure 4) et une quatrième zone (sortie SH2(2) en haut sur la figure 4) de chaque interconnecteur en communication fluidique respectivement avec la première zone et la deuxième zone, le cordon d'étanchéité 10 formant une barrière de distribution des gaz 10 séparant le premier secteur trapézoïdal (T1) comprenant les première et troisième zones, d'un deuxième secteur trapézoïdal (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du secteur (T1) et la section d'écoulement des gaz est également croissante ou décroissante entre les deuxième et quatrième zones au sein du deuxième secteur (T2).

Toutes les première à quatrième zones des interconnecteurs 5 sont situées individuellement à l'aplomb respectivement des première à quatrième zones des autres interconnecteurs 5 de l'empilement.

En outre, comme visible en figures 4 et 5, on alimente les première et deuxième zones de chaque interconnecteur de telle sorte que la circulation à chaque cathode dans le premier secteur trapézoïdal T1 est à contre-courant de la circulation dans le deuxième secteur trapézoïdal T2.

Dans la configuration selon la figure 4, on alimente le mélange de vapeur d'eau et dioxyde de carbone par la plus grande base des secteurs trapézoïdaux T1 et T2, afin de minimiser la réaction de méthanation in situ comparativement à la réaction de co-électrolyse au sein de l'empilement, la surface catalytique diminuant le long du trajet des gaz produits pour la même surface électrochimique.

Dans la configuration selon la figure 5, on alimente le mélange de vapeur d'eau et dioxyde de carbone par la plus petite base des secteurs trapézoïdaux T1 et T2, afin de maximiser la réaction de méthanation comparativement à la réaction de co-électrolyse au sein de l'empilement, la surface catalytique augmentant le long du trajet des gaz produits pour la même surface électrochimique

Les interconnecteurs 5 peuvent en outre être réalisés pour agencer les différentes zones d'alimentation et de récupération du gaz drainant et de l'oxygène produit de telle sorte que leur circulation au niveau des cellules C1 soit à co-courant de celle au niveau des cellules C2 ou à contre-courant.

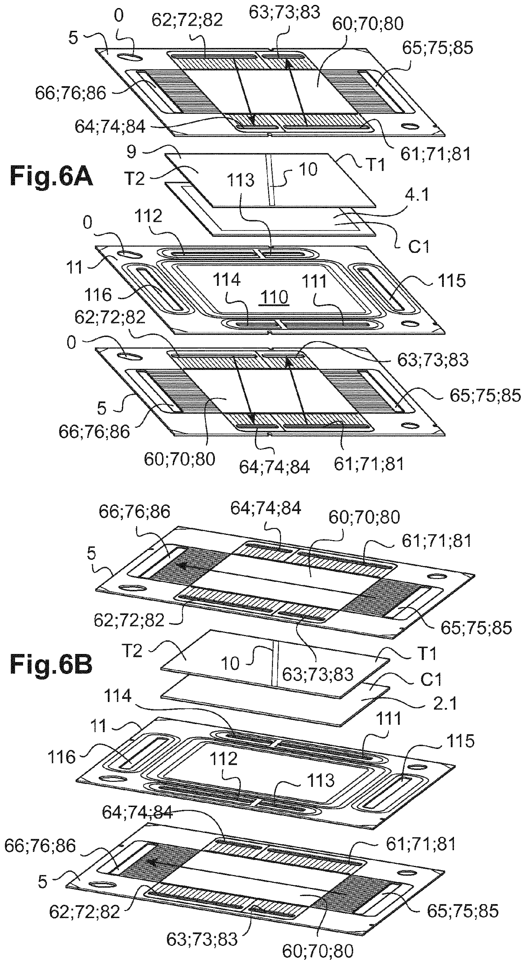

On a représenté de manière schématique aux figures 6A et 6B, une partie d'un co-électrolyseur haute température à oxydes solides (SOEC) selon l'invention.

Ce réacteur de co-électrolyse comporte un empilement de cellules d'électrolyse élémentaires de type SOEC (Cl, C2) formées chacune d'une cathode 2.1, 2.2, d'une anode 4.1, 4.2 et d'un électrolyte 3.1, 3.2, intercalé entre la cathode et l'anode.

Un interconnecteur électrique et fluidique 5 est agencé entre deux cellules élémentaires adjacentes C1, C2 avec une de ses faces en contact électrique avec l'anode d'une des deux cellules élémentaires et l'autre de ses faces en contact électrique avec la cathode de l'autre des deux cellules élémentaires.

Comme montré en figures 6A et 6B, on prévoit en outre des cadres d'isolation et d'étanchéité 11 permettant d'assurer l'isolation électrique entre deux interconnecteurs 5 adjacents. Chaque cadre 11 est percé de lumières O adaptées pour loger des tirants de fixation de l'empilement, ainsi que des joints 12 prévus pour réaliser l'étanchéité autour des lumières d'alimentation des gaz en co-électrolyse H2O, CO2, Air et de récupération des gaz produits H$_2$, CO, O$_2$ avec Air, ainsi qu'autour de la cellule.

L'ensemble des cellules d'électrolyse C1 et C2 est traversé par le même courant électrique.

Dans le réacteur selon l'invention, tous les compartiments cathodiques 50 des cellules C1, C2 d'un même secteur trapézoïdal T1 ou T2 dans lesquels circulent le mélange de vapeur d'eau H$_2$O et de CO$_2$ d'alimentation et l'hydrogène produit H$_2$ avec éventuellement du syngaz communiquent entre eux. En revanche, la circulation des gaz à l'intérieur de chaque compartiment cathodique 50 du secteur trapézoïdal T1 est indépendante de celle du secteur T2.

La réaction de co-électrolyse produit de l'oxygène qui est récolté par tous les compartiments anodiques 51 qui communiquent entre eux.

Selon l'invention, chaque élément 9 de contact électrique et de distribution des gaz intégrant un cordon d'étanchéité 10 forme une barrière de distribution des gaz entre d'une part une première 61, 71, 81 et une troisième 63, 73, 83 zone d'interconnecteur 5 et d'autre part entre une deuxième 62, 72, 82 et une quatrième 64, 74, 84 zone d'interconnecteur.

Les première à quatrième zones d'interconnecteur 5 sont dimensionnées et la barrière 10 de circulation des gaz est agencée de telle sorte que la distribution des gaz entre la première 61, 71, 81 et la troisième 63, 73, 83 zone est réalisée dans une première secteur T1 de forme trapézoïdale. La distribution des gaz entre la deuxième 62, 72, 82 et la quatrième zone 64, 74, 84 est réalisé dans un deuxième secteur T2 de forme trapézoïdale.

Comme visible sur la figure 6B, Les deux secteurs trapézoïdaux T1 et T2 sont jointifs par la barrière 10 en formant une surface sensiblement égale à celle rectangulaire ou carrée de chaque cellule.

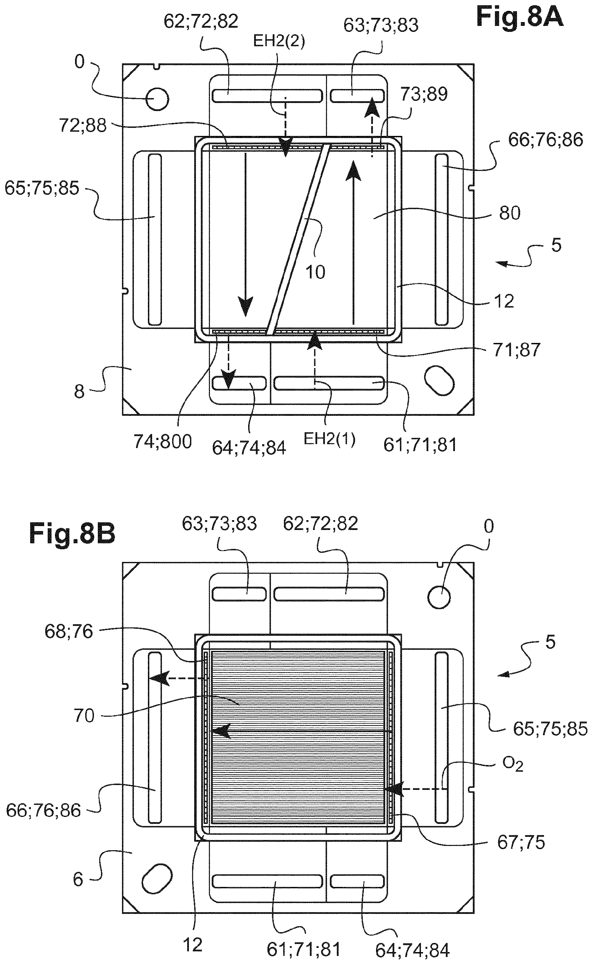

En outre, comme montré aux figures 8A et 8B, un joint d'étanchéité 12 assure l'étanchéité en périphérie de compartiment cathodique 50. La barrière 10 est également jointive avec ce joint 12.

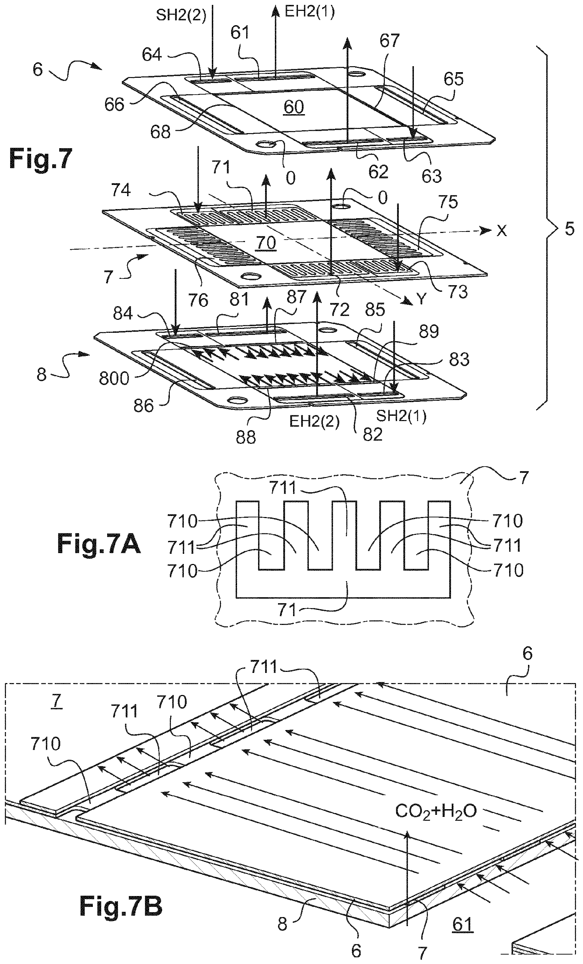

La figure 7 montre en éclaté un interconnecteur 5 selon l'invention permettant d'assurer l'alimentation en vapeur d'eau H$_2$O et Co2, la circulation à contre-courant dans les deux secteurs trapézoïdaux du mélange de vapeur d'eau , de CO2, et du syngaz produit aux cellules C1, C2 ainsi que la récupération de l'oxygène O$_2$ produit au sein de l'empilement.

L'interconnecteur 5 est constitué de trois tôles planes 6, 7, 8 allongées selon deux axes de symétrie (X, Y) orthogonaux entre eux, les tôles planes étant stratifiées et assemblées entre elles par soudure. Une tôle centrale 7 est intercalée entre une première 6 et une deuxième 8 tôle d'extrémité.

La deuxième 8 tôle d'extrémité est destinée à venir en contact mécanique avec le plan d'une cathode 2.1 d'une cellule C1 d'électrolyse élémentaire et la tôle centrale 7 est destinée à venir en contact mécanique avec le plan d'une anode 4.1 d'une cellule d'électrolyse élémentaire adjacente, chacune des deux cellules d'électrolyse élémentaires adjacentes (Cl, C2) de type SOEC étant formée d'une cathode 2.1, 2.2, d'une anode 4.1, 4.2 et d'un électrolyte 3.1, 3.2 intercalé entre la cathode et l'anode.

Chacune des trois tôles planes 6, 7, 8 comporte une partie centrale 60, 70, 80.

La première tôle d'extrémité 6 comporte une partie centrale 60 percée tandis que la deuxième tôle d'extrémité 8, ainsi que la tôle centrale 7 comporte une partie centrale non percée respectivement 80 et 70.

Chaque tôle 6, 7, 8 est percée, à la périphérie de sa partie centrale, de six lumières 61, 62, 63, 64, 65, 66 ; 71, 72, 73, 74, 75, 76 ; 81, 82, 83, 84, 85, 86.

Les premières 61, 71, 81 à quatrième 64, 74, 84 lumières de chaque tôle sont allongées sur une longueur correspondant à une partie de la longueur de la partie centrale 60, 70, 80 selon l'un des axes X des tôles et sont réparties deux à deux de part et d'autre dudit axe X.

La cinquième 65, 75, 85 lumière est allongée sur une longueur correspondant sensiblement à la longueur de la partie centrale 60, 70, 80 selon l'autre des axes Y.

La sixième 66, 76, 86 lumière est allongée sur une longueur correspondant sensiblement à la longueur de la partie centrale 60, 70, 80 selon l'autre des axes Y.

La première 6 tôle d'extrémité comporte en outre une septième 67 et huitième 68 lumières agencées symétriquement de part et d'autre de l'axe Y, à l'intérieur de ses premières à quatrième lumières 61 à 64, et sont allongées sur une longueur correspondant sensiblement à la longueur de la partie centrale selon l'axe Y.

La deuxième 8 tôle d'extrémité comporte en outre une septième 87, huitième 88, neuvième 89 et dixième 800 lumières à l'intérieur respectivement de sa première 81, deuxième 82, troisième 83 et quatrième 84 lumières, chacune de ces septième à dixième lumières étant allongée sur une longueur correspondant sensiblement respectivement à la longueur de la première à quatrième lumières selon l'axe X.

Comme visible sur la figure 7, les première 71 à sixième 76 lumières de la tôle centrale sont élargies vers l'intérieur par rapport respectivement aux première 61, 81 à sixième 66, 86 lumières de chaque tôle d'extrémité 6, 8.

Les première 61, 71, 71 et deuxième 62, 72, 82 lumières des trois tôles 6, 7, 8 sont sensiblement de dimensions sensiblement identiques entre elles.

Les troisième 63, 73, 83 et quatrième 64, 74, 84 lumières des trois tôles 6, 7, 8 sont de dimensions sensiblement identiques entre elles.

La longueur des première 61, 71, 71 et deuxième 62, 72, 82 lumières est supérieure à celle troisième 63, 73, 83 et quatrième 64, 74, 84 lumières des trois tôles 6, 7, 8. Le rapport de longueur entre celle des première et deuxième lumières et celle des troisième et quatrième lumière détermine la forme géométrique des secteurs trapézoïdaux T1, T2 et donc détermine le ratio que l'on pourra obtenir entre la réaction de méthanation in situ et la réaction électrochimique de co-électrolyse.

Les septième 87 et huitième 88 lumières de la deuxième tôle d'extrémité 8 sont de dimensions sensiblement identiques à celles de ses première 81 et deuxième 82 lumières.

Les neuvième 89 et dixième 800 lumières de la deuxième tôle d'extrémité 8 sont de dimensions dans le sens X sensiblement identiques à celles de ses troisième 83 et quatrième 84 lumières.

Toutes les lumières 71 à 76 élargies de la tôle centrale 7 comportent dans leur partie élargie, des languettes de tôles espacées les unes des autres en formant un peigne, chacune des fentes définie entre le bord d'une fente élargie et une languette ou entre deux languettes consécutives débouchant sur une des lumières intérieures 67, 68 ou 87, 88, 89, 800 respectivement de la première 6 ou de la deuxième 8 tôle d'extrémité.

La stratification et l'assemblage des trois tôles 6, 7, 8 entre elles sont réalisées telles que:

- les languettes de tôles forment des entretoises d'espacement entre première 6 et deuxième 8 tôles d'extrémité respectivement entre les cinquième 65 et septième 67 lumières de la première tôle d'extrémité 6, entre les sixième 66 et huitième 68 lumières de la première tôle d'extrémité 6, entre les première 81 et septième 87 lumières de la deuxième 8 tôle d'extrémité, entre les deuxième 82 et huitième 88 lumières de la deuxième 8 tôle d'extrémité, entre les troisième 83 et neuvième 89 lumières de la deuxième tôle d'extrémité, et entre les quatrième 84 et dixième 800 lumières de la deuxième 8 tôle d'extrémité,
- chacune des première 71 à sixième 76 lumières de la tôle centrale 7 est en communication fluidique individuellement respectivement avec l'une des première 61, 81 à sixième 66, 86 lumières correspondantes des deux autres tôles 6, 8,
- la cinquième 65 et la septième 67 lumières de la première tôle d'extrémité 6 sont en communication fluidique par le biais des fentes de la cinquième lumière 75 élargie de la tôle centrale 7, tandis que la sixième 66 et la huitième 68 lumières de la première tôle d'extrémité sont en communication fluidique par le biais des fentes de la sixième lumière 76 élargie de la tôle centrale 7,
- la première 81 et la septième 87 lumières de la deuxième tôle d'extrémité 8 sont en communication fluidique par le biais des fentes de la première lumière 71 élargie de la tôle centrale 7, tandis que la deuxième 82 et la huitième 88 lumières de la deuxième tôle d'extrémité 8 sont en communication fluidique par le biais des fentes de la deuxième lumière 72 élargie de la tôle centrale 7, la troisième 83 et la neuvième 89 lumières de la deuxième tôle d'extrémité sont en communication fluidique par le biais des fentes de la troisième lumière 73 élargie de la tôle centrale 7, et la quatrième 84 et la dixième 800 lumières de la deuxième tôle d'extrémité 8 sont en communication fluidique par le biais des fentes de la quatrième lumière 74 élargie de la tôle centrale 7.

Les figures 7A et 7B montrent en détail la réalisation du peigne formé par les languettes de tôle 710 au niveau de la fente élargie 71 de la tôle centrale et son agencement entre les deux tôles d'extrémité 6, 8 afin de permettre l'alimentation d'une cellule, ici un mélange vapeur d'eau $H_2O$ et de dioxyde de carbone $CO_2$. Ainsi, le peigne formé 710, 711 permet au mélange de passer de la clarinette d'alimentation 61, 71, 81 à la fente de distribution 87 en passant dans l'espace entre les deux tôles d'extrémité 6, 8. L'épaisseur de la tôle 7 centrale au niveau de ce peigne 710, 711 lui confère une fonction d'entretoise et garantit ainsi la hauteur du passage pour le mélange de gaz dans l'espace inter-tôles d'extrémité 6, 8. Un tel passage des gaz selon l'invention par l'intérieur de l'interconnecteur 5a pour avantage de libérer une surface plane pour la réalisation des étanchéités. En outre, on obtient grâce à ces formes de peignes pour les fentes élargies 71,72, d'une part et 75 d'autre part une distribution homogène de chaque gaz ($H_2O$, $CO_2$, Air) sur chaque secteur trapézoïdal d'une cellule de co-électrolyse, et grâce à ces formes de peigne pour les fentes élargies d'une part 73, 74 et 76 d'autre part une récupération des gaz produits ($H_2$, CO, $O_2$).

On décrit maintenant en référence aux figures 8A et 8B, le procédé de fonctionnement d'un réacteur de co-électrolyse selon l'invention tel qu'il vient d'être décrit:

On alimente les premières 61, 71, 81 lumières en un mélange de vapeur d'eau et de dioxyde de carbone $CO_2$ de l'interconnecteur 5 (voir mention EH2(1)) et simultanément mais séparément les deuxièmes 62, 72, 82 lumières du même interconnecteur 5 également avec, de préférence, le même mélange et le même débit (voir mention EH2(2)).

Le parcours au sein d'un interconnecteur 5 du mélange de gaz injecté se transformant progressivement en $H_2$+ CO est schématisé en figures 8A. On voit que chaque secteur trapézoïdal T1 est parcouru par le mélange à contre-courant de celui qui parcourt le secteur trapézoïdal T2 jointif. La barrière 10 au sein de l'élément de contact électrique 9 et de l'électrode 2.1, de préférence une grille de nickel et le joint périphérique de préférence en verre permettent une parfaite étanchéité entre d'une part les deux secteurs T1 et T2 et vis-à-vis de l'extérieur de l'empilement d'autre part.

En outre, on alimente les cinquième 65, 75, 85 lumières des trois tôles 6, 7, 8 de chaque interconnecteur 5 par un gaz drainant (mention E(O$_2$)), tel que de l'air ou de l'oxygène pur.

Le parcours de l'air en tant que gaz drainant injecté et de l'oxygène produit au sein d'un interconnecteur 5 est schématisé en figure 8B.

On récupère ainsi l'hydrogène et le CO produit(s) (mention SH2(1)) par la co-électrolyse de la vapeur d'eau et du CO$_2$ ainsi que, le cas échéant, le méthane produit par la réaction de méthanation au sein même de l'électrode 2.1 au niveau du secteur T1 des cellules, dans les troisièmes 63, 73, 83 lumières de chaque interconnecteur 5.

On récupère également l'hydrogène et le CO produit(s) (mention SH2(2)) par la co-électrolyse de la vapeur d'eau et du CO$_2$ ainsi que, le cas échéant, le méthane produit par la réaction de méthanation au niveau du secteur T2 des cellules, dans les quatrième 64, 74, 84 lumières de chaque interconnecteur 5.

Simultanément, on récupère l'oxygène O$_2$ produit S(O$_2$) dans les sixième 66, 76, 86 lumières des trois tôles 8 de chaque interconnecteur 5. La circulation en gaz drainant et la récupération en oxygène sont donc communes à toutes les cellules, indépendamment de leur séparation en deux secteurs T1, T2 aux cathodes.

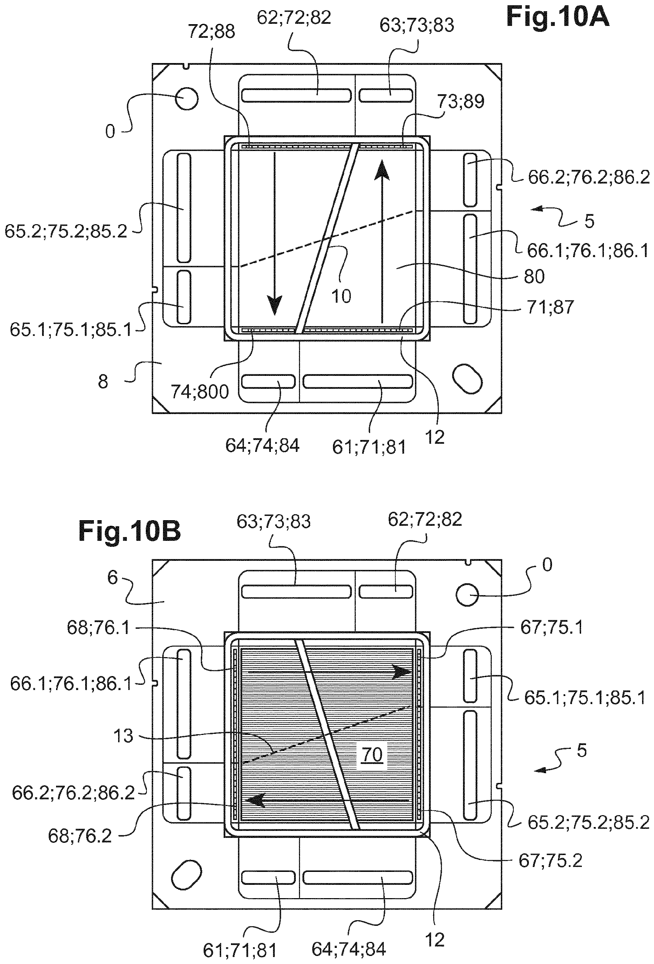

On a représenté en figures 10A et 10B, une variante de circulation des gaz du côté de l'anode 4, selon laquelle on réalise la même séparation en deux secteurs trapézoïdaux jointifs du côté de l'électrode à oxygène (anode 4). Comme visible, les secteurs trapèzoïdaux du côté de la cathode 2 sont à 90° de ceux du côté de l'anode 4. Ainsi, le gaz drainant tel que l'air alimente la zone 66.1, 76.1, 86.1 et de manière indépendante la zone 65.2, 75.2, 85.2. Et l'oxygène produit avec le cas échéant le gaz drainant est récupéré la zone 65.1, 75.1, 85.1 et de manière indépendante la zone 66.2, 76.2, 86.2. La circulation de l'oxygène produit entre la zone 66.1, 76.1, 86.1 et la zone 65.1, 75.1, 85.1 est également à contre-courant entre la zone 65.2, 75.2, 85.2 et la zone 66.2, 76.2, 86.2.

On obtient ainsi une circulation à courant croisé de l'oxygène produit par rapport à l'hydrogène produit avec également une circulation de l'oxygène produit dans deux secteurs trapézoïdaux distincts.

Les trois tôles planes 6, 7, 8 constituant chaque interconnecteur 5 selon l'invention sont des tôles minces métalliques planes, percées et assemblées entre elles par soudures. De préférence, les tôles minces sont des tôles d'épaisseur inférieure à 3mm, typiquement de l'ordre de 0,2 mm. Toutes les soudures entre tôles sont réalisées à la fabrication, et peuvent être réalisées avantageusement selon une technique de laser par transparence, ce qui est possible du fait de la faible épaisseur des tôles minces, typiquement de l'ordre de 0,2 mm.

Toutes les tôles sont avantageusement en acier ferritique avec de l'ordre de 20% de chrome, de préférence en CROFER® 22APU ou le FT18TNb, AISI 441, ou à base Nickel de type Inconel® 600 ou Haynes® dans des épaisseurs typiquement comprises entre 0,1 et 1 mm.

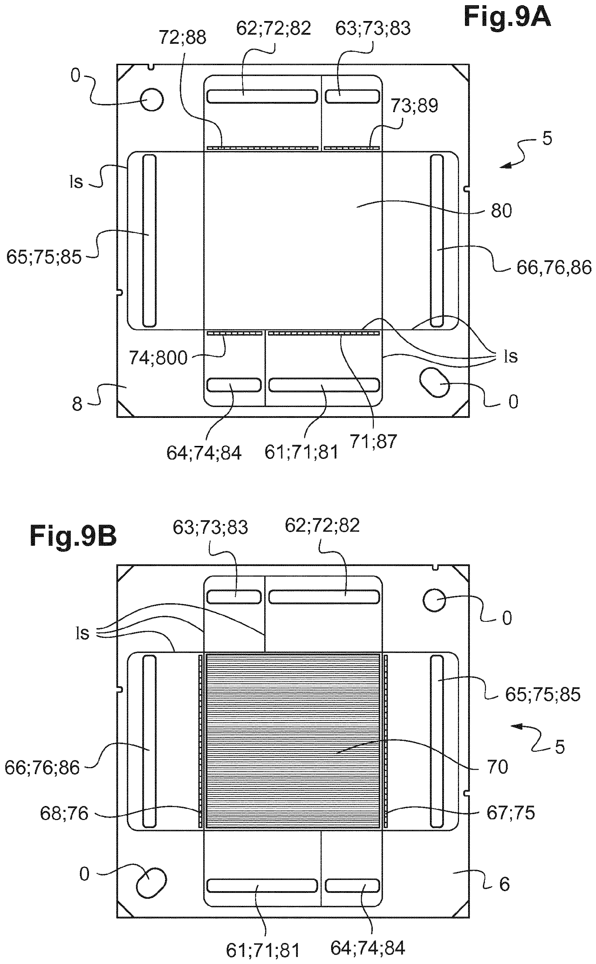

L'assemblage par lignes de soudures ls autour des lumières entre tôles planes 6, 7, 8 garantit une bonne étanchéité lors du fonctionnement de l'électrolyseur entre le mélange de vapeur d'eau et de dioxyde de carbone CO$_2$ amenée aux interconnecteurs 5 et distribué ainsi que les gaz récupérés dans un secteur trapézoïdal T1 et celui dans le secteur jointif T2, et avec le gaz drainant amené E(O2) et l'oxygène S(O2) récupéré. Les lignes de soudures sont illustrées aux figures 9A à 9B.

Tel qu'illustré sur l'ensemble des figures 7 à 10B, les trois tôles 6, 7, 8 sont percées à leur périphérie de lumières supplémentaires O adaptées pour loger des tirants de fixation. Ces tirants de fixation permettent d'appliquer une force de maintien à l'empilement des différents composants du réacteur d'électrolyse.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées dans le cadre de l'invention.

En particulier, si le matériau inséré dans la grille de nickel 8 et dans la cathode 2 pour réaliser le cordon d'étanchéité 10 est une vitrocéramique dans les exemples détaillés ci-dessus, il peut être tout matériau s'opposant au passage des gaz et pouvant être mis facilement en forme au sein d'un substrat poreux métallique d'un élément de contact. Il peut s'agir notamment d'une brasure, avant ou après son mon montage au sein de l'empilement.

### Référence citée

[1]: Fabien Ocampo et al, « Methanation of carbon dioxide over nickel-based Ce0.72Zr0.28O2 mixed oxide catalysts prepared by sol-gel method», Journal of Applied Catalysis A: General 369 (2009) 90-96;

### Revendications

**1.** Procédé de co-électrolyse de la vapeur d'eau H$_2$O et du dioxyde de carbone CO$_2$ et le cas échéant de méthanation in situ, mis en œuvre dans un réacteur (1) comportant un empilement de cellules d'électrolyse élémentaires (Cl, C2) de type à oxydes solides, de surface rectangulaire ou carrée, formées chacune d'une cathode (2.1, 2.2) comportant des matériau(x) catalyseur(s) de réaction de méthanation, d'une anode (4.1, 4.2) et d'un électrolyte (3.1, 3.2) intercalé entre la cathode et l'anode, une pluralité d'interconnecteurs (5) électrique et fluidique agencés chacun entre deux cellules élémentaires (CI, C2) adjacentes avec une de ses faces en contact électrique avec l'anode (4.1) d'une (C1) des deux cellules élémentaires et l'autre de ses faces en contact électrique avec la cathode (2.2) de l'autre (C2) des deux cellules élémentaires, et une pluralité d'éléments (9) de contact électrique et de distribution de gaz, agencés chacun entre une cathode et un interconnecteur, selon lequel:

- on alimente (EH2(1) ; EH2(2)), de manière indépendante une première zone (61, 71, 81) et une deuxième zone (62, 72, 82) de chaque interconnecteur (5), en un mélange de vapeur d'eau $H_2O$ et de dioxyde de carbone $CO_2$ et on le distribue à la cathode de chaque cellule élémentaire puis on récupère (SH2(1) ; SH2(2)), le gaz de synthèse produit (mélange de monoxyde de carbone CO et d'hydrogène $H_2$) et le cas échéant le mélange de méthane $CH_4$ et de vapeur d'eau $H_2O$ supplémentaire produit par méthanation, au sein même de la cathode, dans une troisième zone (63, 73, 83) et une quatrième zone (64, 74, 84) de chaque interconnecteur en communication fluidique respectivement avec la première zone et la deuxième zone; chaque élément (9) de contact électrique et de distribution des gaz intégrant un cordon d'étanchéité (10) formant une barrière de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également croissante ou décroissante entre les deuxième et quatrième zones au sein du deuxième secteur (T2);
- on alimente les première et deuxième zones de chaque interconnecteur de telle sorte que la circulation à chaque cathode dans le premier secteur d'écoulement (T1) est à contre-courant de la circulation dans le deuxième secteur d'écoulement (T2).

2. Procédé selon la revendication 1, les secteurs d'écoulement étant de forme trapézoïdale.

3. Procédé selon la revendication 2, selon lequel on alimente par la plus grande base des premier et deuxième secteurs trapézoïdaux délimitée respectivement par la première et la troisième zone, afin de minimiser la réaction de méthanation in-situ comparativement à la réaction de co-électrolyse au sein de l'empilement.

4. Procédé selon la revendication 2, selon lequel on alimente par la plus petite base des premier et deuxième secteurs trapézoïdaux délimitée respectivement par la première et la troisième zone, afin de maximiser la réaction de méthanation in-situ comparativement à la réaction de co-électrolyse au sein de l'empilement.

5. Procédé selon l'une quelconque des revendications 2 à 4, selon lequel, on détermine au préalable le rapport de longueur entre petite et grande bases des secteurs trapézoïdaux afin de favoriser ou non la réaction de méthanation comparativement à la réaction de co-électrolyse au sein de l'empilement.

6. Procédé de production d'électricité à haute température avec le cas échéant reformage interne de méthane ($CH_4$), mis en œuvre dans une pile à combustible à oxydes solides (SOFC) comportant un empilement de cellules électrochimiques élémentaires (CI, C2) de type SOFC, formées chacune d'une cathode (2.1, 2.2), d'une anode (4.1, 4.2) comportant des matériau(x) catalyseur(s) de réaction de reformage de méthane ($CH_4$), et d'un électrolyte (3.1, 3.2) intercalé entre la cathode et l'anode, une pluralité d'interconnecteurs (5.1 ; 5.2) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre des deux cellules (C2) élémentaires, et une pluralité d'éléments de contact électrique et de distribution de gaz, agencés chacun entre une anode et un interconnecteur, selon lequel:

- on alimente (EH2(1) ; EH2(2)), de manière indépendante une première zone (61, 71, 81) et une deuxième zone (62, 72, 82) de chaque interconnecteur (5), en un combustible, et on le distribue à l'anode de chaque cellule élémentaire puis on récupère (SH2(1) ; SH2(2)) le surplus de combustible (CH4 et le cas échéant mélange de monoxyde de carbone CO et d'hydrogène $H_2$ suite au reformage) et l'eau produite, dans une troisième zone (63, 73, 83) et une quatrième zone (64, 74, 84) de chaque interconnecteur en communication fluidique respectivement avec la première zone et la deuxième zone; chaque élément de contact électrique et de distribution des gaz séparant un premier secteur d'écoulement des gaz (T1) comprenant les première et troisième zones, d'un deuxième secteur d'écoulement des gaz (T2) comprenant les deuxième et quatrième zones, les première et deuxième secteurs étant jointifs par une barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également croissante ou décroissante entre les deuxième et quatrième zones au sein du deuxième secteur (T2);

- on alimente les première et deuxième zones de chaque interconnecteur de telle sorte que la circulation à chaque anode dans le premier secteur d'écoulement (T1) est à contre-courant de la circulation dans le deuxième secteur d'écoulement (T2).

7.  Procédé de production d'électricité à haute température selon la revendication 6, les secteurs d'écoulement étant de forme trapézoïdale.

8.  Procédé de production d'électricité à haute température selon la revendication 7, selon lequel on alimente par la plus grande base des premier et deuxième secteurs trapézoïdaux délimitée respectivement par la première et la troisième zone, afin de maximiser la réaction de reformage comparativement à l'oxydation de l'hydrogène en eau au sein de l'empilement.

9.  Procédé de production d'électricité à haute température selon la revendication 7, selon lequel on alimente par la plus petite base des premier et deuxième secteurs trapézoïdaux délimitée respectivement par la première et la troisième zone, afin de minimiser la réaction de reformage comparativement à l'oxydation de l'hydrogène en eau au sein de l'empilement.

10. Procédé de production d'électricité à haute température selon l'une quelconque des revendications 7 à 9, selon lequel, on détermine au préalable le rapport de longueur entre petite et grande bases des secteurs trapézoïdaux afin de favoriser ou non la réaction de la réaction de reformage comparativement à la réaction d'oxydation de l'hydrogène en eau au sein de l'empilement.

11. Réacteur de co-électrolyse SOEC pour la mise en œuvre d'une co-électrolyse de la vapeur d'eau $H_2O$ et du dioxyde de carbone $CO_2$ et le cas échéant d'une réaction de méthanation in-situ comportant un empilement de cellules d'électrolyse élémentaires (Cl, C2) de type à oxydes solides, de surface rectangulaire ou carrée, formées chacune d'une cathode (2.1, 2.2) comportant des matériau(x) catalyseur(s) de réaction de méthanation, d'une anode (4.1, 4.2) et d'un électrolyte (3.1, 3.2) intercalé entre la cathode et l'anode, une pluralité d'interconnecteurs (5.1 ; 5.2) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre (C2) des deux cellules élémentaires, et une pluralité d'éléments (9) de contact électrique et de distribution de gaz, agencés chacun entre une cathode et un interconnecteur, chaque élément de contact électrique et de distribution des gaz intégrant un cordon d'étanchéité (10) formant une barrière de distribution des gaz séparant un premier secteur d'écoulement des gaz (T1) comprenant les première (61, 71, 81) et troisième (63, 73, 83) zones, d'un deuxième secteur d'écoulement des gaz (T2) comprenant les deuxième (62, 72, 82) et quatrième (64, 74, 84) zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également croissante ou décroissante entre les deuxième et quatrième zones au sein du deuxième secteur (T2).

12. Pile à combustible (SOFC) à haute température pour la mise en œuvre éventuelle d'un reformage interne de méthane (CH4), comportant un empilement de cellules d'électrolyse élémentaires (Cl, C2) de type à oxydes solides, de surface rectangulaire ou carrée, formées chacune d'une cathode (2.1, 2.2), d'une anode (4.1, 4.2) comportant des matériau(x) catalyseur(s) de réaction de reformage du méthane ($CH_4$), et d'un électrolyte (3.1, 3.2) intercalé entre la cathode et l'anode, une pluralité d'interconnecteurs (5.1 ; 5.2) électrique et fluidique agencés chacun entre deux cellules élémentaires (C1, C2) adjacentes avec une de ses faces en contact électrique avec l'anode (2.1) d'une (C1) des deux cellules élémentaires et l'autre de ses faces en contact électrique avec la cathode (4.2) de l'autre (C2) des deux cellules élémentaires, et une pluralité d'éléments de contact (9) électrique et de distribution de gaz, agencés chacun entre une anode et un interconnecteur, chaque élément de contact électrique et de distribution des gaz intégrant un cordon d'étanchéité (10) formant une barrière de distribution des gaz séparant un premier secteur d'écoulement des gaz (T1) comprenant les première (61, 71, 81) et troisième (63, 73, 83) zones, d'un deuxième secteur d'écoulement des gaz (T2) comprenant les deuxième (62, 72, 82) et quatrième (64, 74, 84) zones, les première et deuxième secteurs étant jointifs par la barrière en formant une surface sensiblement égale à celle de chaque cellule; les première à quatrième zones étant dimensionnées et la barrière de circulation des gaz étant agencée de telle sorte que la section d'écoulement des gaz est croissante ou décroissante entre les première et troisième zones au sein du premier secteur (T1) et la section d'écoulement des gaz est également croissante ou décroissante entre les deuxième et quatrième zones au sein du deuxième secteur (T2).

13. Réacteur selon la revendication 11 et pile à combustible selon la revendication 12, constituant le même dispositif destiné à fonctionner de manière réversible en mode co-électrolyse, le cas échéant avec méthanation in situ et en mode pile à combustible, le cas échéant avec reformage interne de méthane.

14. Réacteur ou pile à combustible selon l'une des revendications 11 à 13, les cathodes comprenant des matériau(x) catalyseur(s) de réaction de méthanation ou les anodes comprenant des matériau(x) catalyseur(s) de réaction de reformage du méthane ($CH_4$), étant chacune à base de nickel (Ni) supporté par de la zircone ($ZrO_2$), telle qu'un cermet de nickel et de zircone yttriée noté Ni-YSZ, ou de la cérine.

15. Réacteur ou pile à combustible selon l'une des revendications 11 à 14, chaque élément (9) de contact électrique et de distribution des gaz étant une grille en nickel (Ni) intégrant, en tant que barrière d'étanchéité, un cordon (10) à base de verre ou à base de vitrocéramique, de préférence le cordon (10) séparant en outre l'électrode poreuse (cathode pour le réacteur EHT, anode pour pile).

**Patentansprüche**

1. Verfahren zur Co-Elektrolyse von Wasserdampf $H_2O$ und Kohlendioxid $CO_2$ und gegebenenfalls zur In-Situ-Methanisierung, das in einem Reaktor (1) durchgeführt wird, der einen Stapel elementarer Elektrolysezellen (Cl, C2) vom Festoxidtyp mit rechteckiger oder quadratischer Fläche, die jeweils von einer Kathode (2.1, 2.2) aufweisend Methanisierungsreaktions-Katalysatormaterial(ien), von einer Anode (4.1, 4.2) und einem Elektrolyten (3.1, 3.2), der zwischen der Kathode und der Anode angeordnet ist, gebildet sind, eine Mehrzahl von elektrischen und fluidischen Verbindern (5), die jeweils zwischen zwei angrenzenden elementaren Zellen (Cl, C2) angeordnet sind, wobei eine ihrer Flächen in elektrischem Kontakt mit der Anode (4.1) einer (C1) der zwei elementaren Zellen und die andere ihrer Flächen in elektrischem Kontakt mit der Kathode (2.2) der anderen (C2) der zwei elementaren Zellen steht, und eine Mehrzahl von elektrischen Kontakt- und Gasverteilungselementen (9), die jeweils zwischen einer Kathode und einem Verbinder angeordnet sind, aufweist, wobei:

- ein erster Bereich (61, 71, 81) und ein zweiter Bereich (62, 72, 82) jedes Verbinders (5) unabhängig mit einem Gemisch aus Wasserdampf $H_2O$ und Kohlendioxid $CO_2$ versorgt wird (EH2(1); EH2(2)) und es an die Kathode jeder elementaren Zelle verteilt wird, dann das erzeugte Synthesegas (Gemisch aus Kohlenmonoxid CO und Wasserstoff $H_2$) und gegebenenfalls das zusätzliche Gemisch aus Methan $CH_4$ und Wasserdampf $H_2O$, das durch Methanisierung erzeugt wird, innerhalb der Kathode selbst in einem dritten Bereich (63, 73, 83) und einem vierten Bereich (64, 74, 84) jedes Verbinders in Fluidverbindung mit dem ersten Bereich beziehungsweise dem zweiten Bereich gesammelt wird (SH2(1); SH2(2)); wobei jedes elektrische Kontakt- und Gasverteilungselement (9) ein Dichtungsband (10) aufweist, das eine Gasverteilungssperre bildet, die einen ersten Gasströmungssektor (T1) umfassend den ersten und dritten Bereich von einem zweiten Gasströmungssektor (T2) umfassend den zweiten und vierten Bereich trennt, wobei der erste und zweite Sektor durch die Sperre aneinander anliegen, wobei sie eine Fläche bilden, die im Wesentlichen gleich jener jeder Zelle ist; wobei der erste und vierte Bereich so bemessen und die Gaszirkulationssperre so angeordnet ist, dass der Gasströmungsabschnitt zwischen dem ersten und dritten Bereich innerhalb des ersten Sektors (T1) zunehmend oder abnehmend ist und der Gasströmungsabschnitt zwischen dem zweiten und vierten Bereich innerhalb des zweiten Sektors (T2) ebenfalls zunehmend oder abnehmend ist;
- der erste und zweite Bereich jedes Verbinders so versorgt wird, dass die Zirkulation bei jeder Kathode in dem ersten Strömungssektor (T1) gegen den Strom der Zirkulation in dem zweiten Strömungssektor (T2) verläuft.

2. Verfahren nach Anspruch 1, wobei die Strömungssektoren trapezförmig sind.

3. Verfahren nach Anspruch 2, wobei die Versorgung durch die größte Basis des ersten und zweiten trapezförmigen Sektors erfolgt, die jeweils von dem ersten und dritten Bereich begrenzt ist, um die In-Situ-Methanisierungsreaktion im Vergleich zur Co-Elektrolysereaktion innerhalb des Stapels zu minimieren.

4. Verfahren nach Anspruch 2, wobei die Versorgung durch die kleinste Basis des ersten und zweiten trapezförmigen Sektors erfolgt, die jeweils von dem ersten und dritten Bereich begrenzt ist, um die In-Situ-Methanisierungsreaktion im Vergleich zur Co-Elektrolysereaktion innerhalb des Stapels zu maximieren.

5. Verfahren nach einem der Ansprüche 2 bis 4, wobei zuvor das Längenverhältnis zwischen kleiner und großer Basis der trapezförmigen Sektoren bestimmt wird, um die Methanisierungsreaktion im Vergleich zur Co-Elektrolysereaktion innerhalb des Stapels zu begünstigen oder nicht.

6. Verfahren zur Hochtemperatur-Elektrizitätserzeugung, gegebenenfalls mit interner Reformierung von Methan ($CH_4$), das in einer Festoxid-Brennstoffzelle (SOFC) durchgeführt wird, die einen Stapel elementarer elektrochemischer Zellen (Cl, C2) vom SOFC-Typ, die jeweils von einer Kathode (2.1, 2.2), von einer Anode (4.1, 4.2) aufweisend Katalysatormaterial(ien) für die Reaktion zur Reformierung von Methan ($CH_4$), und einem Elektrolyten (3.1, 3.2), der zwischen der Kathode und der Anode angeordnet ist, gebildet sind, eine Mehrzahl von elektrischen und fluidischen Verbindern (5.1; 5.2), die jeweils zwischen zwei angrenzenden elementaren Zellen (Cl, C2) angeordnet sind, wobei eine ihrer Flächen in elektrischem Kontakt mit der Anode (4.1) einer (C1) der zwei elementaren Zellen und die andere ihrer Flächen in elektrischem Kontakt mit der Kathode (2.2) der anderen der zwei elementaren Zellen (C2) steht, und eine Mehrzahl von elektrischen Kontakt- und Gasverteilungselementen, die jeweils zwischen einer Anode und einem Verbinder angeordnet sind, aufweist, wobei:

   - ein erster Bereich (61, 71, 81) und ein zweiter Bereich (62, 72, 82) jedes Verbinders (5) unabhängig mit einem Brennstoff versorgt wird (EH2(1); EH2(2)) und er an die Anode jeder elementaren Zelle verteilt wird, dann der Überschuss an Brennstoff ($CH_4$ und gegebenenfalls Gemisch aus Kohlenmonoxid CO und Wasserstoff $H_2$ nach der Reformierung) und das erzeugte Wasser in einem dritten Bereich (63, 73, 83) und einem vierten Bereich (64, 74, 84) jedes Verbinders in Fluidverbindung mit dem ersten Bereich beziehungsweise dem zweiten Bereich gesammelt wird (SH2(1); SH2(2)); wobei jedes elektrische Kontakt- und Gasverteilungselement einen ersten Gasströmungssektor (T1) umfassend den ersten und dritten Bereich von einem zweiten Gasströmungssektor (T2) umfassend den zweiten und vierten Bereich trennt, wobei der erste und zweite Sektor durch eine Sperre aneinander anliegen, wobei sie eine Fläche bilden, die im Wesentlichen gleich jener jeder Zelle ist; wobei der erste und vierte Bereich so bemessen und die Gaszirkulationssperre so angeordnet ist, dass der Gasströmungsabschnitt zwischen dem ersten und dritten Bereich innerhalb des ersten Sektors (T1) zunehmend oder abnehmend ist und der Gasströmungsabschnitt zwischen dem zweiten und vierten Bereich innerhalb des zweiten Sektors (T2) ebenfalls zunehmend oder abnehmend ist;
   - der erste und zweite Bereich jedes Verbinders so versorgt wird, dass die Zirkulation bei jeder Anode in dem ersten Strömungssektor (T1) gegen den Strom der Zirkulation in dem zweiten Strömungssektor (T2) verläuft.

7. Verfahren zur Hochtemperatur-Elektrizitätserzeugung nach Anspruch 6, wobei die Strömungssektoren trapezförmig sind.

8. Verfahren zur Hochtemperatur-Elektrizitätserzeugung nach Anspruch 7, wobei die Versorgung durch die größte Basis des ersten und zweiten trapezförmigen Sektors erfolgt, die jeweils von dem ersten und dritten Bereich begrenzt ist, um die Reformierungsreaktion im Vergleich zur Oxidation des Wasserstoffs zu Wasser innerhalb des Stapels zu maximieren.

9. Verfahren zur Hochtemperatur-Elektrizitätserzeugung nach Anspruch 7, wobei die Versorgung durch die kleinste Basis des ersten und zweiten trapezförmigen Sektors erfolgt, die jeweils von dem ersten und dritten Bereich begrenzt ist, um die Reformierungsreaktion im Vergleich zur Oxidation des Wasserstoffs zu Wasser innerhalb des Stapels zu minimieren.

10. Verfahren zur Hochtemperatur-Elektrizitätserzeugung nach einem der Ansprüche 7 bis 9, wobei zuvor das Längenverhältnis zwischen kleiner und großer Basis der trapezförmigen Sektoren bestimmt wird, um die Reaktion der Reformierungsreaktion im Vergleich zur Oxidationsreaktion des Wasserstoffs zu Wasser innerhalb des Stapels zu begünstigen oder nicht.

11. SOEC-Co-Elektrolysereaktor zur Durchführung einer Co-Elektrolyse von Wasserdampf $H_2O$ und Kohlendioxid $CO_2$ und gegebenenfalls einer In-Situ-Methanisierungsreaktion, aufweisend einen Stapel elementarer Elektrolysezellen (Cl, C2) vom Festoxidtyp mit rechteckiger oder quadratischer Fläche, die jeweils von einer Kathode (2.1, 2.2) aufweisend Methanisierungsreaktions-Katalysatormaterial(ien), von einer Anode (4.1, 4.2) und einem Elektrolyten (3.1, 3.2), der zwischen der Kathode und der Anode angeordnet ist, gebildet sind, eine Mehrzahl von elektrischen

EP 3 516 718 B1

und fluidischen Verbindern (5.1; 5.2), die jeweils zwischen zwei angrenzenden elementaren Zellen (Cl, C2) angeordnet sind, wobei eine ihrer Flächen in elektrischem Kontakt mit der Anode (4.1) einer (C1) der zwei elementaren Zellen und die andere ihrer Flächen in elektrischem Kontakt mit der Kathode (2.2) der anderen (C2) der zwei elementaren Zellen steht, und eine Mehrzahl von elektrischen Kontakt- und Gasverteilungselementen (9), die jeweils zwischen einer Kathode und einem Verbinder angeordnet sind, wobei jedes elektrische Kontakt- und Gasverteilungselement ein Dichtungsband (10) aufweist, das eine Gasverteilungssperre bildet, die einen ersten Gasströmungssektor (T1) umfassend den ersten (61, 71, 81) und dritten (63, 73, 83) Bereich von einem zweiten Gasströmungssektor (T2) umfassend den zweiten (62, 72, 82) und vierten (64, 74, 84) Bereich trennt, wobei der erste und zweite Sektor durch die Sperre aneinander anliegen, wobei sie eine Fläche bilden, die im Wesentlichen gleich jener jeder Zelle ist; wobei der erste und vierte Bereich so bemessen und die Gaszirkulationssperre so angeordnet ist, dass der Gasströmungsabschnitt zwischen dem ersten und dritten Bereich innerhalb des ersten Sektors (T1) zunehmend oder abnehmend ist und der Gasströmungsabschnitt zwischen dem zweiten und vierten Bereich innerhalb des zweiten Sektors (T2) ebenfalls zunehmend oder abnehmend ist.

12. Hochtemperatur-Brennstoffzelle (SOFC) für die eventuelle Durchführung einer internen Reformierung von Methan ($CH_4$), aufweisend einen Stapel elementarer Elektrolysezellen (Cl, C2) vom Festoxidtyp mit rechteckiger oder quadratischer Fläche, die jeweils von einer Kathode (2.1, 2.2), von einer Anode (4.1, 4.2) aufweisend Katalysatormaterial(ien) für die Reaktion zur Reformierung des Methans ($CH_4$) und einem Elektrolyten (3.1, 3.2), der zwischen der Kathode und der Anode angeordnet ist, gebildet sind, eine Mehrzahl von elektrischen und fluidischen Verbindern (5.1; 5.2), die jeweils zwischen zwei angrenzenden elementaren Zellen (Cl, C2) angeordnet sind, wobei eine ihrer Flächen in elektrischem Kontakt mit der Anode (2.1) einer (C1) der zwei elementaren Zellen und die andere ihrer Flächen in elektrischem Kontakt mit der Kathode (4.2) der anderen (C2) der zwei elementaren Zellen steht, und eine Mehrzahl von elektrischen Kontakt- und Gasverteilungselementen (9), die jeweils zwischen einer Anode und einem Verbinder angeordnet sind, wobei jedes elektrische Kontakt- und Gasverteilungselement ein Dichtungsband (10) aufweist, das eine Gasverteilungssperre bildet, die einen ersten Gasströmungssektor (T1) umfassend den ersten (61, 71, 81) und dritten (63, 73, 83) Bereich von einem zweiten Gasströmungssektor (T2) umfassend den zweiten (62, 72, 82) und vierten (64, 74, 84) Bereich trennt, wobei der erste und zweite Sektor durch die Sperre aneinander anliegen, wobei sie eine Fläche bilden, die im Wesentlichen gleich jener jeder Zelle ist; wobei der erste und vierte Bereich so bemessen und die Gaszirkulationssperre so angeordnet ist, dass der Gasströmungsabschnitt zwischen dem ersten und dritten Bereich innerhalb des ersten Sektors (T1) zunehmend oder abnehmend ist und der Gasströmungsabschnitt zwischen dem zweiten und vierten Bereich innerhalb des zweiten Sektors (T2) ebenfalls zunehmend oder abnehmend ist.

13. Reaktor nach Anspruch 11 und Brennstoffzelle nach Anspruch 12, die dieselbe Vorrichtung bilden, die dazu bestimmt ist, umkehrbar im Co-Elektrolyse-Modus zu funktionieren, gegebenenfalls mit In-Situ-Methanisierung, und im Brennstoffzellenmodus, gegebenenfalls mit interner Methanreformierung.

14. Reaktor oder Brennstoffzelle nach einem der Ansprüche 11 bis 13, die Kathoden umfassend Methanisierungsreaktions-Katalysatormaterial(ien) oder die Anoden umfassend Katalysatormaterial(ien) für die Reaktion zur Reformierung des Methans ($CH_4$), die jeweils auf Nickel (Ni) basieren, das von Zirkoniumdioxid ($ZrO_2$) gestützt wird, wie beispielsweise ein Cermet aus Nickel und mit Yttrium versetztem Zirkoniumdioxid, das als Ni-YSZ bezeichnet wird, oder Cerdioxid.

15. Reaktor oder Brennstoffzelle nach einem der Ansprüche 11 bis 14, wobei jedes elektrische Kontakt- und Gasverteilungselement (9) ein Gitter aus Nickel (Ni) ist, das als Dichtungssperre ein Band (10) auf Glasbasis oder Glaskeramikbasis aufweist, wobei das Band (10) vorzugsweise ferner die poröse Elektrode (Kathode für den HTE-Reaktor, Anode für Brennstoffzelle) trennt.

**Claims**

1. A method for the co-electrolysis of steam $H_2O$ and of carbon dioxide $CO_2$, and where appropriate in-situ methanation, implemented in a reactor (1) comprising a stack of individual electrolysis cells (C1, C2) of solid oxide type, with a rectangular or square area, each formed of a cathode (2.1, 2.2) comprising material(s) for catalyzing a methanation reaction, of an anode (4.1, 4.2) and of an electrolyte (3.1, 3.2) inserted between the cathode and the anode, a plurality of electrical and fluid interconnectors (5) each arranged between two adjacent individual cells (C1, C2) with one face thereof in electrical contact with the anode (4.1) of one (C1) of the two individual cells and the other face thereof in electrical contact with the cathode (2.2) of the other (C2) of the two individual cells, and a plurality of electrical contact and gas distribution elements (9), each arranged between a cathode and an interconnector, according to which:

- a first zone (61, 71, 81) and a second zone (62, 72, 82) of each interconnector (5) are supplied independently (EH2(1); EH2(2)), with a mixture of steam $H_2O$ and of carbon dioxide $CO_2$ and it is distributed to the cathode of each individual cell, then the synthesis gas produced (mixture of carbon monoxide CO and hydrogen $H_2$) and where appropriate the additional mixture of methane $CH_4$ and of steam $H_2O$ produced by methanation are recovered (SH2(1); SH2(2)) within the cathode itself, in a third zone (63, 73, 83) and a fourth zone (64, 74, 84) of each interconnector in fluid communication respectively with the first zone and the second zone; each electrical contact and gas distribution element (9) integrating a sealing bead (10) forming a gas distribution barrier separating a first gas flow sector (T1) comprising the first and third zones from a second gas flow sector (T2) comprising the second and fourth zones, the first and second sectors being adjoined by the barrier, forming an area substantially equal to that of each cell; the first to fourth zones being dimensioned, and the gas circulation barrier being arranged, such that the flow section of the gases increases or decreases between the first and third zones within the first sector (T1) and the flow section of the gases also increases or decreases between the second and fourth zones within the second sector (T2);
- the first and second zones of each interconnector are supplied such that the circulation to each cathode in the first flow sector (T1) is in counterflow to the circulation in the second flow sector (T2).

2.  The method as claimed in claim 1, the flow sectors being of trapezoidal form.

3.  The method as claimed in claim 2, according to which supply is carried out via the largest base of the first and second trapezoidal sectors delimited respectively by the first and the third zone, in order to minimize the in situ methanation reaction compared to the co-electrolysis reaction within the stack.

4.  The method as claimed in claim 2, according to which supply is carried out via the smallest base of the first and second trapezoidal sectors delimited respectively by the first and the third zone, in order to maximize the in situ methanation reaction compared to the co-electrolysis reaction within the stack.

5.  The method as claimed in any one of claims 2 to 4, according to which the length ratio between small and large bases of the trapezoidal sectors is determined beforehand in order to promote or not promote the methanation reaction compared to the co-electrolysis reaction within the stack.

6.  A method for producing electricity at high temperature, with, where appropriate, internal reforming of methane ($CH_4$), implemented in a solid oxide fuel cell (SOFC) comprising a stack of individual electrochemical cells (C1, C2) of SOFC type, each formed of a cathode (2.1, 2.2), of an anode (4.1, 4.2) comprising material(s) for catalyzing a reaction for reforming methane ($CH_4$), and of an electrolyte (3.1, 3.2) inserted between the cathode and the anode, a plurality of electrical and fluid interconnectors (5.1; 5.2) each arranged between two adjacent individual cells (C1, C2) with one face thereof in electrical contact with the anode (4.1) of one (C1) of the two individual cells and the other face thereof in electrical contact with the cathode (2.2) of the other (C2) of the two individual cells, and a plurality of electrical contact and gas distribution elements, each arranged between a cathode and an interconnector, according to which:

- a first zone (61, 71, 81) and a second zone (62, 72, 82) of each interconnector (5) are supplied independently (EH2(1); EH2(2)), with a fuel and it is distributed to the anode of each individual cell, then the surplus fuel ($CH_4$ and where appropriate mixture of carbon monoxide CO and hydrogen $H_2$ following reforming) and the water produced are recovered (SH2(1); SH2(2)), in a third zone (63, 73, 83) and a fourth zone (64, 74, 84) of each interconnector in fluid communication respectively with the first zone and the second zone; each electrical contact and gas distribution element separating a first gas flow sector (T1) comprising the first and third zones from a second gas flow sector (T2) comprising the second and fourth zones, the first and second sectors being adjoined by a barrier, forming an area substantially equal to that of each cell; the first to fourth zones being dimensioned, and the gas circulation barrier being arranged, such that the flow section of the gases increases or decreases between the first and third zones within the first sector (T1) and the flow section of the gases also increases or decreases between the second and fourth zones within the second sector (T2);
- the first and second zones of each interconnector are supplied such that the circulation to each anode in the first flow sector (T1) is in counterflow to the circulation in the second flow sector (T2).

7.  The method for producing electricity at high temperature as claimed in claim 6, the flow sectors being of trapezoidal form.

8. The method for producing electricity at high temperature as claimed in claim 7, according to which supply is carried out via the largest base of the first and second trapezoidal sectors delimited respectively by the first and the third zone, in order to maximize the reforming reaction compared to the oxidation of hydrogen to give water within the stack.

9. The method for producing electricity at high temperature as claimed in claim 7, according to which supply is carried out via the smallest base of the first and second trapezoidal sectors delimited respectively by the first and the third zone, in order to minimize the reforming reaction compared to the oxidation of hydrogen to give water within the stack.

10. The method for producing electricity at high temperature as claimed in any one of claims 7 to 9, according to which the length ratio between small and large bases of the trapezoidal sectors is determined beforehand in order to promote or not promote the methanation reaction compared to the oxidation of hydrogen to give water reaction within the stack.

11. An SOEC co-electrolysis reactor for carrying out co-electrolysis of steam $H_2O$ and of carbon dioxide $CO_2$ and where appropriate an in situ methanation reaction comprising a stack of individual electrolysis cells (C1, C2) of solid oxide type, with a rectangular or square area, each formed of a cathode (2.1, 2.2) comprising material(s) for catalyzing a methanation reaction, of an anode (4.1, 4.2) and of an electrolyte (3.1, 3.2) inserted between the cathode and the anode, a plurality of electrical and fluid interconnectors (5.1; 5.2) each arranged between two adjacent individual cells (C1, C2) with one face thereof in electrical contact with the anode (4.1) of one (C1) of the two individual cells and the other face thereof in electrical contact with the cathode (2.2) of the other (C2) of the two individual cells, and a plurality of electrical contact and gas distribution elements (9), each arranged between a cathode and an interconnector, each electrical contact and gas distribution element integrating a sealing bead (10) forming a gas distribution barrier separating a first gas flow sector (T1) comprising the first (61, 71, 81) and third (63, 73, 83) zones from a second gas flow sector (T2) comprising the second (62, 72, 82) and fourth (64, 74, 84) zones, the first and second sectors being adjoined by the barrier, forming an area substantially equal to that of each cell; the first to fourth zones being dimensioned, and the gas circulation barrier being arranged, such that the flow section of the gases increases or decreases between the first and third zones within the first sector (T1) and the flow section of the gases also increases or decreases between the second and fourth zones within the second sector (T2).

12. A high-temperature fuel cell (SOFC) for optionally carrying out internal reforming of methane ($CH_4$), comprising a stack of individual electrolysis cells (C1, C2) of solid oxide type, with a rectangular or square area, each formed of a cathode (2.1, 2.2), of an anode (4.1, 4.2) comprising material(s) for catalyzing a reaction for reforming methane ($CH_4$), and of an electrolyte (3.1, 3.2) inserted between the cathode and the anode, a plurality of electrical and fluid interconnectors (5.1; 5.2) each arranged between two adjacent individual cells (C1, C2) with one face thereof in electrical contact with the anode (2.1) of one (C1) of the two individual cells and the other face thereof in electrical contact with the cathode (4.2) of the other (C2) of the two individual cells, and a plurality of electrical contact and gas distribution elements (9), each arranged between an anode and an interconnector, each electrical contact and gas distribution element integrating a sealing bead (10) forming a gas distribution barrier separating a first gas flow sector (T1) comprising the first (61, 71, 81) and third (63, 73, 83) zones from a second gas flow sector (T2) comprising the second (62, 72, 82) and fourth (64, 74, 84) zones, the first and second sectors being adjoined by the barrier, forming an area substantially equal to that of each cell; the first to fourth zones being dimensioned, and the gas circulation barrier being arranged, such that the flow section of the gases increases or decreases between the first and third zones within the first sector (T1) and the flow section of the gases also increases or decreases between the second and fourth zones within the second sector (T2).

13. The reactor as claimed in claim 11 and fuel cell as claimed in claim 12, constituting the same device intended to operate reversibly in co-electrolysis mode, where appropriate with in situ methanation, and in fuel cell mode, where appropriate with internal methane reforming.

14. The reactor or fuel cell as claimed in one of claims 11 to 13, the cathodes comprising material(s) for catalyzing a methanation reaction, or the anodes comprising material(s) for catalyzing a reaction for reforming methane ($CH_4$), each being based on nickel (Ni) supported by zirconia ($ZrO_2$), such as a cermet of nickel and yttriated zirconia, denoted Ni-YSZ, or ceria.

15. The reactor or fuel cell as claimed in one of claims 11 to 14, each electrical contact and gas distribution element (9) being a nickel (Ni) screen integrating, as sealing barrier, a bead (10) based on glass and/or glass-ceramic, the bead (10) also preferably separating the porous electrode (cathode for the HTE reactor, anode for fuel cell).

Fig.1

Fig.2

# Fig.3

# Fig.4

# Fig.5

Fig.6A

Fig.6B

**Fig.7**

**Fig.7A**

**Fig.7B**

$CO_2+H_2O$

**Fig.8A**

**Fig.8B**

**Fig.9A**

**Fig.9B**

**Fig.10A**

**Fig.10B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011110674 A1
- US 20020081471 A
- US 6689499 B2

**Littérature non-brevet citée dans la description**

- **FABIEN OCAMPO et al.** Methanation of carbon dioxide over nickel-based Ce0.72Zr0.28O2 mixed oxide catalysts prepared by sol-gel method. *Journal of Applied Catalysis A: General,* 2009, vol. 369, 90-96